(19) Europäisches Patentamt
European Patent Office
Office européen des brevets

(11) EP 4 303 247 A1

(12) **EUROPEAN PATENT APPLICATION**
published in accordance with Art. 153(4) EPC

(43) Date of publication:
**10.01.2024 Bulletin 2024/02**

(21) Application number: **22763157.9**

(22) Date of filing: **28.02.2022**

(51) International Patent Classification (IPC):
***C08G 59/50*** *(2006.01)* ***C08K 7/02*** *(2006.01)*
***C08L 63/00*** *(2006.01)* ***C08J 5/04*** *(2006.01)*

(52) Cooperative Patent Classification (CPC):
**C08G 59/50; C08J 5/04; C08K 7/02; C08L 63/00**

(86) International application number:
**PCT/JP2022/008140**

(87) International publication number:
**WO 2022/186101 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.03.2021 JP 2021032689**
**09.03.2021 JP 2021037504**

(71) Applicant: **Teijin Limited**
**Osaka 530-0005 (JP)**

(72) Inventors:
- **OZAWA Suguru**
  **Osaka-shi Osaka 530-0005 (JP)**
- **ODA Akimichi**
  **Osaka-shi Osaka 530-0005 (JP)**
- **OSAKI Kohei**
  **Osaka-shi Osaka 530-0005 (JP)**
- **KANEKO Toru**
  **Osaka-shi Osaka 530-0005 (JP)**

(74) Representative: **Carpmaels & Ransford LLP**
**One Southampton Row**
**London WC1B 5HA (GB)**

(54) **CURING AGENT COMPOSITION FOR THERMOSETTING RESIN, EPOXY RESIN COMPOSITION, AND FIBER-REINFORCED COMPOSITE MATERIAL**

(57) [Problem]

To provide an epoxy resin composition having a long pot life and fast curability.

[Solution]

An epoxy resin composition containing a curing agent A, a curing agent B, a curing agent C, an epoxy resin D, an epoxy resin E, and resin particles F, wherein the curing agent A is an aromatic polyamine having a substituent selected from an alkyl group, an aromatic group, and a halogen group at each of two ortho positions of an amino group, the curing agent B is an aromatic polyamine that is liquid at 25°C, and the curing agent C is an aromatic polyamine having only one electron donating substituent or no substituent at an ortho position of an amino group, the epoxy resin D is constituted by an epoxy resin which is composed of a monomer containing 4 or more glycidyl groups, and the epoxy resin E is constituted by an epoxy resin which is composed of a monomer containing 2 or 3 glycidyl groups.

EP 4 303 247 A1

## Description

[Technical Field]

The present invention relates to a curing agent composition for thermosetting resin, and more specifically to that which can produce an epoxy resin composition to have a long pot life and fast curability. The present invention also relates to an epoxy resin composition and a fiber-reinforced composite material using the curing agent composition for thermosetting resin.

[Background Art]

Fiber-reinforced composite materials (hereinafter also referred to as "FRP") have lightweightness, high strength, and high rigidity, and are used in a wide range of fields such as sports and leisure applications of fishing rods, golf shafts, and the like, and industrial applications of automobiles, aircraft, and the like

A fiber-reinforced composite material is manufactured by using a thermosetting resin or a thermoplastic resin as a matrix resin and compositing this matrix resin with a reinforcing fiber base material.

As a method of molding a fiber-reinforced composite material using a thermosetting resin as a matrix resin, the following methods have been known: a resin transfer molding method (hereinafter may be referred to as "RTM method") in which a reinforcing fiber base material placed in a mold in advance is impregnated with a liquid matrix resin and then cured, or a method in which a prepreg (intermediate base material) is prepared by impregnating in advance a matrix resin into a reinforcing fiber base material to form a sheet shape, and then the prepreg is molded into a desired shape.

In recent years, attention has been focused on the RTM method, which requires few steps and does not require expensive equipment such as an autoclave and thus can produce fiber-reinforced composite materials at low cost and with high productivity.

A matrix resin used in the RTM method is an epoxy resin composition containing an epoxy resin and a curing agent. In order to obtain a fiber-reinforced composite material with high mechanical properties, aromatic polyamines are commonly used as curing agents.

In the epoxy resin composition used in the RTM method, the curing agent and additives are often stored and used in a dissolved state in the epoxy resin in order to prevent the curing agent from being filtered out during the impregnation of the epoxy resin composition into the reinforcing fiber base material. Such an epoxy resin composition in which a curing agent and additives are dissolved in the epoxy resin is called a one-component epoxy resin composition.

The one-component epoxy resin composition has a short shelf life because the reaction between the epoxy resin and the curing agent relatively tends to occur. Therefore, the one-component epoxy resin composition needs to be stored frozen, which poses a problem in handleability.

In order to solve this problem, development is underway on a two-component epoxy resin composition in which an epoxy resin and a curing agent are mixed just before use. A two-component epoxy resin composition is composed of a base resin liquid containing an epoxy resin as a main component and a curing agent liquid containing a curing agent as a main component, and the epoxy resin composition is obtained by mixing the two just before use.

Although the curing agent used in the one-component epoxy resin composition can also be used as the curing agent for the two-component epoxy resin composition, the curing agent of aromatic polyamine used in the one-component epoxy resin composition is usually a solid as described in PTL 1, and is likely to cause insufficient mixing with the base resin liquid.

In a two-component epoxy resin composition, ease of mixing is important because the base resin liquid and the curing agent liquid are mixed just before use. If the curing agent used for the one-component epoxy resin composition is used as the curing agent for the two-component epoxy resin composition, insufficient mixing tends to occur. This is because aromatic polyamines used as curing agent in one-component epoxy resin compositions are usually solids. Therefore, the curing agent is desirably liquid form in the two-component epoxy resin composition.

As an epoxy resin composition using a curing agent of a liquid aromatic polyamine, those described in PTLs 2 and 3 are known. However, resin cured products obtained from these epoxy resin compositions do not have sufficient mechanical properties such as elastic modulus and fracture toughness.

In addition, in the RTM method, fast curability is required for highly efficient production of fiber-reinforced composite materials. PTL 4 proposes a fast-curable two-component epoxy resin composition using a compound having two or more aromatic rings having phenolic hydroxy groups. However, addition of a compound having a phenolic hydroxy group to the epoxy resin composition rapidly increases the viscosity of the resin composition due to its high reactivity, and extremely shortens the pot life in RTM molding, resulting in difficulty of impregnating a sufficient amount of the epoxy resin composition inside the reinforcing fiber base material. Therefore, a fiber-reinforced composite material produced using such an epoxy resin composition is to contain many defects such as voids. As a result, there is a problem of lowering the compression performance and damage tolerance of the fiber-reinforced composite material.

There has not been known so far a two-component epoxy resin composition capable of providing a fiber-reinforced composite material or resin cured product having a sufficiently fast curability and having the heat resistance and mechanical properties required for industrial applications such as automobiles, aircraft, and the like, and neither has the liquid curing agent used therefor.

[Citation List]

[Patent Literature]

[PTL 1] JP-A-2014-148572
[PTL 2] JP-A-2015-193713
[PTL 3] WO2009/119467
[PTL 4] Japanese Patent No. 6617559

[Summary of Invention]

[Technical Problem]

A first problem of the present invention is to provide a curing agent composition for thermosetting resin that can produce an epoxy resin composition to have a long pot life and sufficiently fast curability. In particular, the problem is to provide a curing agent composition for thermosetting resin that can produce a two-component epoxy resin composition to have a long pot life and sufficiently fast curability. Furthermore, the problem is to provide a curing agent composition for thermosetting resin that becomes a uniform liquid when heated to a temperature of 200°C or lower and then, at room temperature, can maintain the uniform liquid state for a period of one week or longer.

A second problem of the present invention is to provide an epoxy resin composition having a low viscosity, a long pot life, and a sufficiently fast curability. In particular, the problem is to provide a two-component epoxy resin composition having a low viscosity, a long pot life, and a sufficiently fast curability.

Further, a problem of the present invention is to provide a resin cured product and a fiber-reinforced composite material having the heat resistance and mechanical properties required for industrial applications.

[Solution to Problem]

A first invention of the present invention is a curing agent composition for thermosetting resin, containing a curing agent A, a curing agent B, and a curing agent C, wherein the curing agent A is an aromatic polyamine having a substituent selected from an alkyl group, an aromatic group and a halogen group at each of two ortho positions of an amino group, the curing agent B is an aromatic polyamine that is liquid at 25°C, and the curing agent C is an aromatic polyamine having only one electron donating substituent or no substituent at an ortho position of an amino group.

The above curing agent composition for thermosetting resin of the present invention is used for producing an epoxy resin composition. In this case, the curing agent composition for thermosetting resin of the present invention is used together with an epoxy base resin. As the epoxy base resin, epoxy resin D and epoxy resin E are preferably used. Resin particles F are preferably further blended with the epoxy resin composition. Epoxy resin D, epoxy resin E, and resin particles F will be described later in detail.

The second invention of the present invention is an epoxy resin composition containing the curing agent composition for thermosetting resin of the present invention, the epoxy resin D, the epoxy resin E, and the resin particles F.

That is, the second invention of the present invention is an epoxy resin composition containing a curing agent A, a curing agent B, a curing agent C, an epoxy resin D, an epoxy resin E, and resin particles F, wherein the curing agent A is an aromatic polyamine having a substituent selected from an alkyl group, an aromatic group, and a halogen group at each of two ortho positions of an amino group, the curing agent B is an aromatic polyamine that is liquid at 25°C, and the curing agent C is an aromatic polyamine having only one electron donating substituent or no substituent at an ortho position of an amino group, the epoxy resin D is constituted by an epoxy resin which is composed of a monomer containing 4 or more glycidyl groups, and the epoxy resin E is constituted by an epoxy resin which is composed of a monomer containing 2 or 3 glycidyl groups.

[Advantageous Effects of Invention]

The present invention can firstly provide a curing agent composition for thermosetting resin that can produce

an epoxy resin composition to have a long pot life and sufficiently fast curability. In particular, there can be provided a curing agent composition for thermosetting resin that can produce a two-component epoxy resin composition to have a long pot life and sufficiently fast curability. Furthermore, there can be provided a curing agent composition for thermosetting resin that becomes a uniform liquid when heated to a temperature of 200°C or lower, and then, at room temperature, can maintain the uniform liquid state for a period of one week or longer.

The present invention can secondly provide an epoxy resin composition having a low viscosity, a long pot life, and a sufficiently fast curability. In particular, there can be provided a two-component epoxy resin composition having a low viscosity, a long pot life, and a sufficiently fast curability.

The present invention can further provide a resin cured product and a fiber-reinforced composite material having the heat resistance and mechanical properties required for industrial applications.

[Description of Embodiments]

The present invention will be described in detail below. A fiber-reinforced composite material may be abbreviated as "FRP", and a carbon fiber-reinforced composite material as "CFRP".

[Curing agent composition for thermosetting resin]

The curing agent composition for thermosetting resin of the present invention is a curing agent composition for thermosetting resin containing a curing agent A, a curing agent B, and a curing agent C. This curing agent composition for thermosetting resin becomes a uniform liquid by heating to a temperature of 80 to 200°C.

The curing agent composition for thermosetting resin of the present invention becomes a uniform liquid at a temperature of 80 to 200°C, is a uniform liquid after raising the liquid temperature to 200°C, then lowering to 25°C, and standing at 25°C for 1 week, preferably, is a uniform liquid after standing for further 2 weeks (3 weeks in total), and particularly preferably, is a uniform liquid after standing for 1 month in total.

It becomes substantially difficult to handle the curing agent composition for thermosetting resin in a liquid state when the period of keeping a uniform liquid state is less than 1 week after standing at 25°C after raising the liquid temperature to 200°C and then lowering to 25°C, which is likely to cause insufficient mixing with the base resin liquid, and is thus not preferable.

In the curing agent composition for thermosetting resin of the present invention, the total mass of the curing agent A, the curing agent B, and the curing agent C is preferably 70 to 100 mass% with respect to the total mass of the curing agent composition for thermosetting resin.

[Curing agent A]

The curing agent A is an aromatic polyamine having a substituent selected from an alkyl group, an aromatic group, and a halogen group at each of two ortho positions of an amino group. In addition, the curing agent A is solid at 25°C. Containing the curing agent A, when cured as a composition with an epoxy resin, enables to obtain an epoxy resin cured product having excellent heat resistance and mechanical properties such as elastic modulus, and fracture toughness.

A compound represented by the following chemical formula (1) can be used as the aromatic polyamine having a substituent at each of two ortho positions of the amino group, which is used as the curing agent A.

[Chem. 1]

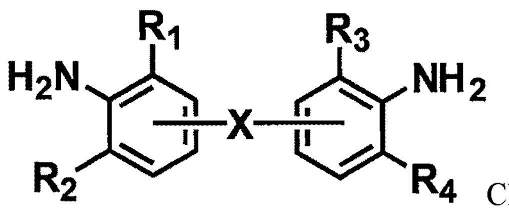

Chemical formula (1)

In the above chemical formula (1), $R_1$ to $R_4$ are each independently an aliphatic substituent, an aromatic substituent, an alkoxy group, or a halogen atom, and at least one substituent is an aliphatic substituent having 1 to 6 carbon atoms, an aromatic substituent, or a halogen atom. X is $-CH_2-$, $-CH(CH_3)-$, $-C(CH_3)_2-$, -S-, -O-, $-SO_2-$, -CO-, -CONH-, - NHCO-, -C(=O)-, or -OC(=O)-.

In the chemical formula (1), examples of aliphatic substituents having 1 to 6 carbon atoms include methyl group, ethyl group, propyl group, isopropyl group, n-butyl group, sec-butyl group, tert-butyl group, n-pentyl group, neopentyl group, n-hexyl group, and cyclohexyl group. Examples of aromatic substituents include phenyl group and naphthyl group.
The aromatic polyamine of the curing agent A is preferably aromatic diamines, of which a 4,4'-diaminodiphenyl methane derivative is particularly preferred.
Specific examples of the aromatic polyamines include compounds represented by the following chemical formulas (2) to (5). These may be used alone or in combination.

[Chem. 2]

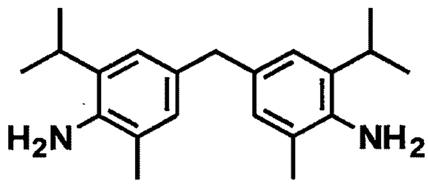

Chemical formula (2)

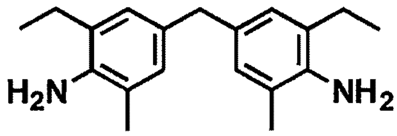

Chemical formula (3)

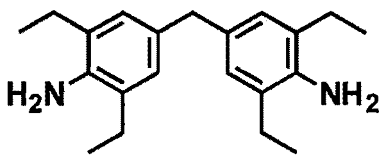

Chemical formula (4)

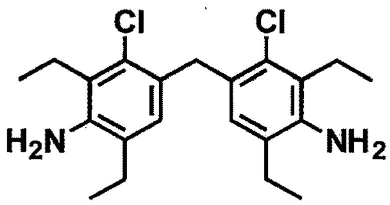

Chemical formula (5)

[Curing agent B]

The curing agent B is an aromatic polyamine that is liquid at 25°C. Containing the aromatic polyamine enables to obtain a curing agent composition for thermosetting resin that can maintain a liquid state at room temperature.
As the aromatic polyamine of the curing agent B, a phenylenediamine derivative or a 4,4'-diaminodiphenyl methane derivative is preferably used. Examples of the aromatic polyamine include compounds represented by the following chemical formula (6) or (7).

[Chem. 3]

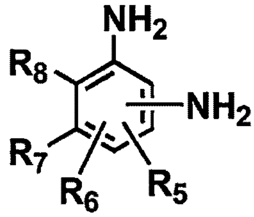

Chemical formula (6)

In the chemical formula (6), $R_5$ to $R_8$ are each independently a hydrogen atom, an aliphatic substituent, an alkoxy group, or a thioalkoxy group, and at least one substituent is an aliphatic substituent having 1 to 6 carbon atoms or a thioalkoxy group.

[Chem. 4]

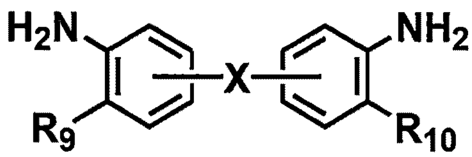

Chemical formula (7)

In the chemical formula (7), $R_9$ to $R_{10}$ are each independently an aliphatic substituent, a methoxy group, an alkoxy group or a thioalkoxy group. X is $-CH_2-$.

Specific examples of the aromatic polyamine used as the curing agent B include compounds represented by the following chemical formulas (8) to (12). These may be used alone or in combination.

[Chem. 5]

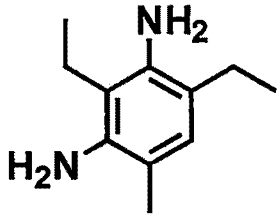

Chemical formula (8)

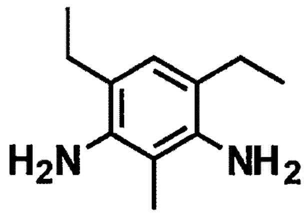

Chemical formula (9)

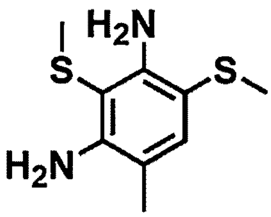

Chemical formula (10)

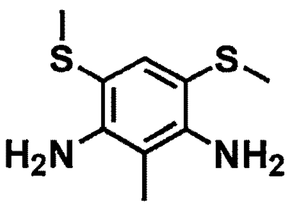

Chemical formula (11)

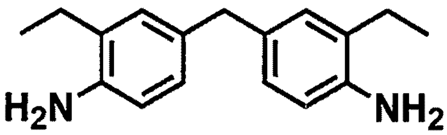

Chemical formula (12)

In the curing agent composition for thermosetting resin of the present invention, the mass ratio of the curing agent A to the curing agent B is preferably 1:99 to 99: 1, more preferably 20:80 to 80:20, and particularly preferably 40:60 to 70:30. The mass ratio of the curing agent A less than the above ratio tends to cause insufficient heat resistance and mechanical properties such as elastic modulus, and fracture toughness to the obtained resin cured product, which is not preferable. On the other hand, the mass ratio of the curing agent A higher than the above ratio makes it difficult for the obtained curing agent composition for thermosetting resin to maintain a liquid state at room temperature, which is not preferable.

[Curing agent C]

The curing agent C is an aromatic polyamine having only one electron donating substituent or no substituent at an ortho position of an amino group. The electron donating substituent of the aromatic polyamine of the curing agent C is preferably a methyl group, an ethyl group, a propyl group, an isopropyl group, a methoxy group, or an ethoxy group. Containing the curing agent C facilitates the curing reaction of the obtained epoxy resin composition, and can impart fast curability to the epoxy resin composition.

Examples of the curing agent C include 4,4'-diaminodiphenyl ether, 3,4'-diaminodiphenyl ether, 2,2-bis[4-(4-aminophenoxy)phenyl]propane, 1,3-bis(4-aminophenoxy)benzene, 1,3-bis(3-aminophenoxy)benzene, 4,4'-thiodianiline, 4,4'-diamino-3,3'-dimethyldiphenylmethane, 1,1-bis(4-aminophenyl)cyclohexane, 3,3'-diaminobenzophenone, m-phenylenediamine, 2,4-diaminotoluene, 2,6-diaminotoluene, 2,4,6-trimethyl-1,3-phenylenediamine, 4,4'-diaminodiphenylsulfone, 3,3'-diaminodiphenylsulfone, 3,4'-diaminodiphenylsulfone, o-dianisidine, and 3,3',5,5'-tetramethylbenzidine. Among them, 3,4'-diaminodiphenyl ether, 2,2-bis[4-(4-aminophenoxy)phenyl]propane, 1,3-bis(4-aminophenoxy)benzene, 1,3-bis(3-aminophenoxy)benzene, 2,6-diaminotoluene, and m-phenylenediamine are preferably used, and 3,4'-diaminodiphenyl ether, 1,3-bis(4-aminophenoxy)benzene, 2,6-diaminotoluene, and m-phenylenediamine are preferred.

The curing agent C preferably has a melting point of 200°C or lower, more preferably 150°C or lower, and particularly preferably 120°C or lower. The melting point higher than 200°C makes it difficult to obtain a liquid composition when the curing agent C is mixed with the curing agents A and B, and tends to make it difficult to maintain the obtained curing agent composition for thermosetting resin in a liquid state at room temperature, which is thus not preferable.

The curing agent composition for thermosetting resin of the present invention contains the curing agent C of, with respect to a total of 100 parts by mass of the curing agents A and B, preferably 1 to 43 parts by mass, more preferably 3 to 30 parts by mass, and particularly preferably 5 to 20 parts by mass. The content less than 1 part by mass makes it difficult to impart fast curability to the obtained epoxy resin composition, which is not preferable. On the other hand, the content more than 43 parts by mass excessively enhances the reactivity of the obtained epoxy resin composition, and extremely shortens the pot life during RTM molding, which is not preferable. This case makes it difficult to impregnate a sufficient amount of resin inside the reinforcing fiber base material, and the fiber-reinforced composite material produced using such an epoxy resin composition will contain many defects such as voids, resulting in reduction of the compression performance and damage tolerance of the fiber reinforced composite structure.

[Epoxy resin composition]

The present invention further provides an epoxy resin composition. The epoxy resin composition contains the curing agent composition for thermosetting resin described above and the epoxy base resin described below.

The total amount of the curing agent contained in the epoxy resin composition of the present invention is an amount suitable for curing all the epoxy resins blended in the epoxy resin composition, and is adjusted appropriately depending on the type of epoxy resin and curing agent for use. In this case, the ratio between the total number of epoxy groups of the epoxy resin in the epoxy resin composition and the number of active hydrogens contained in the curing agent composition for thermosetting resin is preferably adjusted so as to meet the following ratio conditions. The ratio is preferably 0.7 to 1.3, more preferably 0.8 to 1.2, and particularly preferably 0.9 to 1.1. The ratio of the number of active hydrogens less than 0.7 or more than 1.3 will disturb the molar balance between the epoxy groups and the active hydrogens, and will cause insufficient cross-linking density in the obtained resin cured product, resulting in decrease in heat resistance and mechanical properties such as elastic modulus and fracture toughness, which is not preferable.

[Epoxy base resin]

The epoxy base resin contains the epoxy resin described below. The epoxy base resin contains epoxy resins particularly preferably of epoxy resin D and epoxy resin E further described later, and the embodiment of containing both is most preferable.

The epoxy base resin may further contain other components. The content of the epoxy resin in the epoxy base resin is, with respect to the total mass of the epoxy base resin, preferably 30 to 100 mass%, and more preferably 50 to 100 mass%.

[Epoxy resin]

Examples of epoxy resins include tetrafunctional glycidylamine-type epoxy resins such as tetraglycidyl-4,4'-diaminodiphenyl methane, tetraglycidyl-4,4'-diaminodiphenylsulfone, tetraglycidyl-3,3'-diaminodiphenylsulfone, tetraglycidyl-4,4'-diaminodiphenyl ether, and tetraglycidyl-3,4'-diaminodiphenyl ether; trifunctional epoxy resins such as

triglycidyl-m-aminophenol, triglycidyl-p-aminophenol, and triglycidyl isocyanurate; and bifunctional epoxy resins such as diglycidylaniline and its derivatives including diglycidyl-o-toluidine, diglycidyl-m-toluidine, diglycidyl-p-toluidine, diglycidyl-xylidine, diglycidyl-mesidine, diglycidyl-anisidine, and diglycidyl-phenoxyaniline, or diglycidyl-naphthylamine and its derivatives, bisphenol A diglycidyl ether, bisphenol F diglycidyl ether, bisphenol S diglycidyl ether, resorcinol diglycidyl ether, and 1,6-naphthalenediol diglycidyl ether. These epoxy resins may be used alone, or may be used by mixing a plurality thereof.

Epoxy resins may be synthesized as needed. For example, they can be obtained by reacting raw materials of aromatic diamine, aminophenol, or diphenol and epihalohydrin such as epichlorohydrin to obtain a halohydrin body, followed by a cyclization reaction using an alkaline compound.

Examples of epihalohydrin include epichlorohydrin, epibromohydrin, and epifluorohydrin. Among them, epichlorohydrin and epibromohydrin are particularly preferable from the viewpoint of reactivity and handleability.

The molar ratio of the aromatic diamine, aminophenol or diphenol to epihalohydrin is preferably 1:1 to 1:30, and more preferably 1:3 to 1:20. Examples of the solvents used in the reaction include alcohol solvents such as ethanol and n-butanol, ketone solvents such as methyl isobutyl ketone and methyl ethyl ketone, aprotic polar solvents such as acetonitrile and N,N-dimethylformamide, and aromatic hydrocarbon solvents such as toluene and xylene. The amount of the solvent to be used is preferably 1 to 10 mass times of the aromatic diamine.

The reaction time is preferably 0.1 to 180 hours, and more preferably 0.5 to 24 hours. The reaction temperature is preferably 20 to 100°C, and more preferably 40 to 80°C.

Examples of alkaline compounds used in the cyclization reaction include sodium hydroxide and potassium hydroxide. The alkaline compound may be added as a solid or as an aqueous solution.

A phase transfer catalyst may be used during the cyclization reaction. Examples of phase transfer catalysts include quaternary ammonium salts such as tetramethylammonium chloride, tetraethylammonium bromide, benzyltriethylammonium chloride, and tetrabutylammonium hydrogen sulfate; phosphonium compounds such as tributylhexadecylphosphonium bromide and tributyldodecylphosphonium bromide; crown ethers such as 18-crown-6-ether.

[Optional components contained in epoxy base resin]

The epoxy base resin may further contain a thermoplastic resin in addition to the epoxy resin. The thermoplastic resin improves the fracture toughness and impact resistance of the obtained fiber-reinforced composite material. Such a thermoplastic resin may be dissolved in the curing agent composition for thermosetting resin in the production process of the curing agent composition for thermosetting resin.

Examples of thermoplastic resins include polyethersulfone, polysulfone, polyetherimide, and polycarbonate. These may be used alone or in combination of two or more.

The thermoplastic resin is particularly preferably polyethersulfone or polysulfone having a weight average molecular weight (Mw) in the range of 8,000 to 100,000 as measured by gel permeation chromatography. The weight average molecular weight (Mw) of 8,000 or more imparts sufficient impact resistance to the obtained FRP, and that of 100,000 or less does not impart significantly increased viscosity and thus enables to obtain the epoxy resin composition exhibiting good handleability.

The thermoplastic resin preferably has a uniform molecular weight distribution. In particular, the polydispersity (Mw/Mn), the ratio of the weight average molecular weight (Mw) to the number average molecular weight (Mn), is preferably 1 to 10, and more preferably 1.1 to 5.

The thermoplastic resin preferably has a reactive group having reactivity with the epoxy resin or a functional group forming a hydrogen bond with the epoxy resin. In this case, the thermoplastic resin can improve the dissolution stability of the epoxy resin during the curing process. In addition, fracture toughness, chemical resistance, heat resistance, and wet heat resistance can be imparted to the fiber-reinforced composite material obtained after curing.

The reactive groups having reactivity with the epoxy resin are preferably a hydroxy group, a carboxylic acid group, an imino group, and an amino group. Hydroxy-terminated polyethersulfone is particularly preferably used due to the particularly excellent impact resistance, fracture toughness and solvent resistance of the obtained fiber-reinforced composite material.

When the curing agent composition for thermosetting resin of the present invention contains a thermoplastic resin, the content thereof is appropriately adjusted depending on the viscosity. From the viewpoint of impregnation into the reinforcing fiber base material, the amount is preferably 0.1 to 10 parts by mass, more preferably 0.5 to 5 parts by mass with respect to 100 parts by mass of the curing agent composition for thermosetting resin. The amount of 0.1 parts by mass or more allows the obtained fiber-reinforced composite material to exhibit sufficient fracture toughness and impact resistance. The thermoplastic resin content of 10 parts by mass or less does not impart significantly increased viscosity to the epoxy resin composition, which facilitates impregnating into the reinforcing fiber base material, and thus improves the properties of the obtained fiber-reinforced composite material.

The thermoplastic resins preferably contain reactive aromatic oligomers having amine end groups (hereinafter

also simply referred to as "aromatic oligomer").

The epoxy resin composition of the present invention becomes high molecular weight due to a curing reaction between the epoxy resin and the curing agent during heat curing. The expansion of a two-phase region due to the increased molecular weight causes reaction-induced phase separation by the aromatic oligomer dissolved in the epoxy resin composition. The phase separation causes a two-phase resin structure, in which the cured epoxy resin and the aromatic oligomer are bicontinuous, to be formed in the matrix resin. In addition, having amine end groups, the aromatic oligomers also react with epoxy resins. Since each phase in this bicontinuous two-phase structure is strongly bonded to each other, solvent resistance is also improved.

The bicontinuous structure absorbs external impact on the fiber-reinforced composite material and suppresses crack propagation. As a result, fiber-reinforced composite material produced using epoxy resin compositions containing reactive aromatic oligomers having amine end groups has high impact resistance and fracture toughness.

As the aromatic oligomer, known polysulfones having amine end groups and polyether sulfones having amine end groups can be used. The amine end groups are preferably primary amine ($-NH_2$) end groups.

The aromatic oligomer preferably has a weight average molecular weight of 8,000 to 40,000 as measured by gel permeation chromatography. The weight average molecular weight of 8,000 or more is highly effective for improving the toughness of the matrix resin. In addition, weight average molecular weight of 40,000 or less does not impart excessively increased viscosity to the resin composition, and thus gives processing advantages such as facilitating impregnation of the resin composition into the reinforcing fiber base material.

Aromatic oligomers of commercially available products such as "Virantage DAMS VW-30500 RP (registered trademark)" (manufactured by Solvay Specialty Polymers) can be used.

[Composition ratio of epoxy resin composition]

The total amount of the curing agent A, the curing agent B, and the curing agent C is, with respect to the total mass of curing agents contained in the epoxy resin composition, preferably 70 to 100 mass%, and more preferably 80 to 100 mass%. The total amount of less than 70 mass% may impart insufficient heat resistance to the resin cured product, which is not preferable.

The mass ratio of the curing agent A to the curing agent B in the epoxy resin composition is preferably 1:99 to 99: 1, more preferably 20:80 to 80:20, and particularly preferably 40:60 to 70:30. The ratio of the curing agent A less than 1 tends to impart insufficient heat resistance and mechanical properties such as elastic modulus and fracture toughness to the obtained cured product, which is not preferable. On the other hand, the ratio of the curing agent A more than 99 makes it difficult for the obtained curing agent composition for thermosetting resin to maintain a liquid state at room temperature, which is not preferable.

The epoxy resin composition contains the curing agent C of, with respect to a total of 100 parts by mass of the curing agents A and B, preferably 1 to 43 parts by mass, more preferably 3 to 30 parts by mass, and more preferably 5 to 20 parts by mass. The content of the curing agent C less than 1 part by mass makes it difficult to impart fast curability to the obtained epoxy resin composition, which is not preferable. On the other hand, the content more than 43 parts by mass excessively enhances the reactivity of the obtained epoxy resin composition, and extremely shortens the pot life during RTM molding, which is not preferable. This case makes it difficult to impregnate a sufficient amount of resin inside the reinforcing fiber base material, and the fiber-reinforced composite material produced using such an epoxy resin composition will contain many defects such as voids, resulting in reduction of the compression performance and damage tolerance of the fiber reinforced composite structure.

[Epoxy resin D]

The epoxy resin D, which is particularly preferably contained in the epoxy base resin and the epoxy resin composition, will be described in detail below.

The epoxy resin D is an epoxy resin composed of a monomer containing 4 or more glycidyl groups.

The epoxy resin D may be a homopolymer composed of one type of monomer, a copolymer composed of two or more types of monomers, or a mixture of homopolymers and/or copolymers.

A constituent monomer, which composes the epoxy resin D, contains 4 or more glycidyl groups, and are preferably represented by the following chemical formula (13).

[Chem. 6]

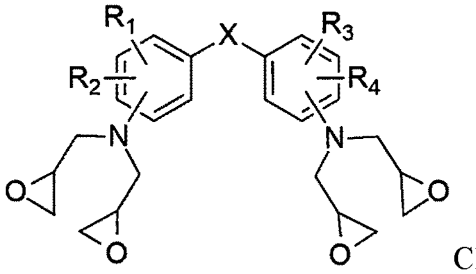

Chemical formula (13)

(In the chemical formula (13), $R_1$ to $R_4$ each independently represent one selected from the group consisting of a hydrogen atom, an aliphatic hydrocarbon group, an alicyclic hydrocarbon group, and a halogen atom, and X represents one selected from $-CH_2-$, -O-, -S-, -CO-, -C(=O)O-, -O-C(=O)-, -NHCO-, -CONH-, $-SO_2-$.)

$R_1$ to $R_4$ each, when being an aliphatic hydrocarbon group or alicyclic hydrocarbon group, preferably have 1 to 4 carbon atoms.

Constituent monomers of the epoxy resin D are particularly preferably one or a combination of two or more selected from the group consisting of tetraglycidyl-4,4'-diaminodiphenyl ether, tetraglycidyl-4,4'-diaminodiphenyl methane, tetraglycidyl-3,4'-diaminodiphenyl ether, and tetraglycidyl-3,3'-diaminodiphenylmethane.

The epoxy resin D is preferably a homopolymer or copolymer composed of these monomers, or a mixture thereof. $R_1$ to $R_4$ are preferably hydrogen atoms because formation of a special steric structure in the resin cured product is less likely to be inhibited. In addition, X is preferably -O- because it facilitates the synthesis of the compound.

Constituent monomers of the epoxy resin D may be synthesized by any method. For example, the constituent monomer can be obtained by reacting raw materials of aromatic diamine and epihalohydrin such as epichlorohydrin preferably in the presence of an acid catalyst to obtain a tetrahalohydrin body, followed by a cyclization reaction using an alkaline compound. Specifically, synthesis can be performed by the method described in Examples below.

Examples of the aromatic diamines include 4,4'-diaminodiphenyl ether, 3,3'-diaminodiphenyl ether, 3,4'-diaminodiphenyl ether, 4,4'-diaminodiphenyl sulfone, 3,3'-diaminodiphenyl sulfone, 3,4'-diaminodiphenyl sulfone, and 4,4'-diaminodiphenyl methane. Among these, from the viewpoint of heat resistance, aromatic diamines are preferable in which two aromatic rings having amino groups are linked by an ether linkage, and more preferably, one amino group is at a para position to the ether linkage, and the other amino group is at an ortho position. Examples of aromatic diamines include 3,4'-diaminodiphenyl ether and 3,4'-diaminodiphenyl sulfone.

Examples of epihalohydrin include epichlorohydrin, epibromohydrin, and epifluorohydrin. Among them, epichlorohydrin and epibromohydrin are particularly preferable from the viewpoint of reactivity and handleability.

The mass ratio of the raw materials of aromatic diamine to epihalohydrin is preferably 1:1 to 1:20, and more preferably 1:3 to 1:10. Examples of the solvents used in the reaction include alcohol solvents such as ethanol and n-butanol, ketone solvents such as methyl isobutyl ketone and methyl ethyl ketone, aprotic polar solvents such as acetonitrile and N,N-dimethylformamide, and aromatic hydrocarbon solvents such as toluene and xylene. Alcohol solvents such as ethanol and n-butanol, and aromatic hydrocarbon solvents such as toluene and xylene are particularly preferable.

The amount of the solvent to be used is preferably 1 to 10 mass times of the aromatic diamine. Acid catalysts of Bronsted acids and Lewis acids both can be suitably used. Bronsted acids are preferably ethanol, water and acetic acid, and Lewis acids are preferably titanium tetrachloride, lanthanum nitrate hexahydrate and boron trifluoride diethyl ether complex.

The reaction time is preferably 0.1 to 180 hours, and more preferably 0.5 to 24 hours. The reaction temperature is preferably 20 to 100°C, and more preferably 40 to 80°C.

Examples of alkaline compounds used in the cyclization reaction include sodium hydroxide and potassium hydroxide. The alkaline compound may be added as a solid or as an aqueous solution.

A phase transfer catalyst may be used during the cyclization reaction. Examples of phase transfer catalysts includes quaternary ammonium salts such as tetramethylammonium chloride, tetraethylammonium bromide, benzyltriethylammonium chloride, and tetrabutylammonium hydrogen sulfate; phosphonium compounds such as tributylhexadecylphosphonium bromide and tributyldodecylphosphonium bromide; and crown ethers such as 18-crown-6-ether.

In the epoxy resin composition of the present invention, the ratio of the epoxy resin D to the total amount of the epoxy resin (epoxy base resin liquid) is preferably 50 to 90 mass%, and particularly preferably 60 to 80 mass%. The ratio of the epoxy resin D of 50 mass% or more can further improves the heat resistance and elastic modulus of the obtained resin cured product. As a result, various mechanical properties of the obtained fiber-reinforced composite material are also improved.

[Epoxy resin E]

The epoxy resin E, which is particularly preferably contained in the epoxy base resin and the epoxy resin composition, will be described in detail below.
The epoxy resin E is an epoxy resin composed of a monomer containing 2 or 3 glycidyl groups.
Containing the epoxy resin E can reduce the viscosity of the epoxy resin composition and improve impregnation property of the resin into the reinforcing fiber base material, extend the pot life, and thus can increase the degree of freedom in designing the mold used in the RTM method.
Combination use of the epoxy resin E and the epoxy resin D enables to improve impregnation property of the resin into the reinforcing fiber base material, and to obtain a resin cured product and a fiber-reinforced composite material that maintain heat resistance and a high elastic modulus.
The epoxy resin E uses a constituent monomer having two or three glycidyl groups. It is preferably an aromatic compound.
As monomers having two glycidyl groups, preferably used are diglycidylaniline and its derivatives of diglycidyl-o-toluidine, diglycidyl-m-toluidine, diglycidyl-p-toluidine, diglycidyl-xylidine, diglycidyl-mesidine, diglycidyl-anisidine, and diglycidyl-phenoxy aniline, and diglycidyl-naphthylamine and derivatives thereof.
In particular, more preferably used are diglycidyl-aniline, diglycidyl-o-toluidine, diglycidyl-m-toluidine, diglycidyl-p-toluidine and diglycidyl-phenoxy aniline, and further preferably used is diglycidyl-aniline or diglycidyl-o-toluidine.
The epoxy resin composed of a monomer containing two or three glycidyl groups is preferably an epoxy resin having a polycyclic aromatic hydrocarbon skeleton.
Examples of polycyclic aromatic hydrocarbon skeletons include naphthalene skeletons and anthracene skeletons, and naphthalene skeletons are preferable from the viewpoint of physical properties of resin cured product.
The polycyclic aromatic hydrocarbon group may have a substituent other than the glycidyl group. Examples of monomers having a naphthalene skeleton include 1,6-bis(glycidyloxy)naphthalene, 1,5-bis(glycidyloxy)naphthalene, 2,6-bis(glycidyloxy)naphthalene, 2,7-bis(glycidyloxy)naphthalene, 2,2'-bis(glycidyloxy)-1, 1'-binaphthalene, and 2,7-bis(glycidyloxy)-1-[2-(glycidyloxy)-1-naphthylmethyl]naphthalene. Use of an epoxy resin containing these compounds as constituent monomers enables to reduce the viscosity of the epoxy resin composition and improve the heat resistance of the resin cured product.
Use of an epoxy resin having a polycyclic aromatic hydrocarbon skeleton as the epoxy resin composed of a monomer containing two or three glycidyl groups does not excessively increase the crosslink density of the cured product, and thus can prevent deterioration of the toughness of the resin cured product, which is preferable.
Among epoxy resins composed of monomers containing two or three glycidyl groups, constituent monomers of the epoxy resin E are preferably aromatic compounds having three glycidyl groups. The epoxy resin is preferably a triglycidylaminophenol derivative epoxy resin. Examples of triglycidylaminophenol derivative epoxy resins include triglycidyl-m-aminophenol and triglycidyl-p-aminophenol. Containing this epoxy resin E enables to reduce the viscosity of the epoxy resin composition, and to improve the heat resistance of the resin cured product.
Among epoxy resins composed of monomers containing two or three glycidyl groups, constituent monomers of the epoxy resin E are also preferably heteroaromatic compounds having three glycidyl groups. That is, the epoxy resin E also preferably contains a triglycidyl isocyanurate derivative epoxy resin. Examples of triglycidyl isocyanurate derivative epoxy resins include 1,3,5-triglycidyl isocyanurate, 1,3,5-tri(ethylglycidyl) isocyanurate, and 1,3,5-tri(pentylglycidyl) isocyanurate. Containing these enables to improve the heat resistance and elastic modulus of the epoxy resin cured product. Therefore, use of the epoxy resin E in combination with the epoxy resin D enables to obtain a resin cured product and a fiber-reinforced composite material that maintain heat resistance and a high elastic modulus.
Constituent monomers of the epoxy resin E are particularly preferably one or a combination of two or more selected from diglycidylaniline, diglycidyl-o-toluidine, triglycidyl-p-aminophenol, triglycidyl-m-aminophenol, 1,6-bis(2,3-epoxypropan-1-yloxy)naphthalene, and 1,3,5-triglycidyl isocyanurate. The epoxy resin E is particularly preferably a homopolymer and a copolymer composed of these monomers, and a mixture thereof.
Other examples of the epoxy resin E include bisphenol A type epoxy resin, bisphenol F type epoxy resin, and bisphenol S type epoxy resin.
In the epoxy resin composition of the present invention, the content of the epoxy resin E is, with respect to the total mass of the epoxy resin (epoxy base resin liquid), preferably 10 to 50 mass%, and more preferably 20 to 40 mass%. Setting the content of the epoxy resin E within this range with respect to the total mass of the epoxy resin enables to produce an epoxy resin composition having a viscosity and pot life suitable for the RTM method and having high heat resistance.

[Resin particles F]

The epoxy resin composition of the present invention preferably further contains resin particles F. The resin

particles F will be described below.

The resin particles F are undissolved and dispersed in the epoxy resin composition, and, even in the resin cured product after the epoxy resin composition is cured, are present as a dispersed state in the resin cured product. When the resin cured product is present as a sea component, the resin particles F are present as an island component in the resin cured product.

Containing the resin particles F can impart high fracture toughness and impact resistance to the epoxy resin cured product and the fiber-reinforced composite material.

As resin particles F, for example, thermoplastic resin particles, thermosetting resin particles, and rubber particles can be used, and rubber particles are preferably used. Examples of rubber particles include silicone rubber, butadiene rubber, styrene-butadiene rubber, and methyl methacrylate-butadiene-styrene rubber.

Examples of commercially available rubber particles used as the resin particles F include MX-153 (bisphenol A type epoxy resin with 33 mass% of butadiene rubber monodispersed, manufactured by Kaneka Corporation), MX-257 (bisphenol A type epoxy resin with 37 mass% of butadiene rubber monodispersed, manufactured by Kaneka Corporation), MX-154 (bisphenol A type epoxy resin with 40 mass% of butadiene rubber monodispersed, manufactured by Kaneka Corporation), MX-960 (bisphenol A type epoxy resin with 25 mass% of silicone rubber monodispersed, manufactured by Kaneka Corporation), MX-136 (bisphenol F type epoxy resin with 25 mass% butadiene rubber monodispersed, manufactured by Kaneka Corporation), MX-965 (bisphenol F type epoxy resin with 25 mass% of silicone rubber monodispersed, manufactured by Kaneka Corporation), MX- 217 (phenol novolak type epoxy resin with 25 mass% of butadiene rubber monodispersed, manufactured by Kaneka Corporation), MX-227M75 (bisphenol A novolak type epoxy resin with 25 mass% of styrene butadiene rubber monodispersed, manufactured by Kaneka Corporation), MX-334M75 (brominated epoxy resin with 25 mass% of styrene-butadiene rubber monodispersed, manufactured by Kaneka Corporation), MX-416 (tetrafunctional glycidylamine-type epoxy resin with 25 mass% of butadiene rubber monodispersed, manufactured by Kaneka Corporation), and MX-451 (trifunctional glycidylamine-type epoxy resin with 25 mass% of styrene-butadiene rubber monodispersed, manufactured by Kaneka Corporation).

The resin particles F have an average particle size of preferably 1.0 μm or less, more preferably 0.5 μm or less, and particularly preferably 0.3 μm or less. The average particle size is preferably 0.03 μm or more, more preferably 0.05 μm or more, and particularly preferably 0.08 μm or more.

The average particle size of 1.0 μm or less can prevent the resin particles F from being filtered out on the surface of the reinforcing fiber base material in the step of impregnating the epoxy resin composition into the reinforcing fiber base material, and facilitates impregnation into the reinforcing fiber bundle. Accordingly, poor impregnation of the resin can be prevented, and a fiber-reinforced composite material having excellent physical properties can be obtained.

In the epoxy resin composition of the present invention, the content of the resin particles F is, with respect to the total amount of the epoxy resin composition, preferably 0.1 to 50 mass%, more preferably 0.5 to 20 mass%, and particularly preferably 1 to 15 mass%. Setting the content to 0.1 mass% or more can sufficiently improve the fracture toughness and impact resistance of the resin cured product and fiber composite material.

The resin particles F are also dispersed at a high concentration in an epoxy resin, which can be used as a masterbatch. This case facilitates high dispersion of the resin particles F in the epoxy resin composition.

[Optional components contained in curing agent composition for thermosetting resin and epoxy resin composition]

The curing agent composition for thermosetting resin and epoxy resin composition of the present invention may further contain other components, such as conductive particles, flame retardants, inorganic fillers, and internal release agents.

Examples of conductive particles include conductive polymer particles such as polyacetylene particles, polyaniline particles, polypyrrole particles, polythiophene particles, polyisothianaphthene particles, and polyethylenedioxythiophene particles; carbon particles, carbon fiber particles, metal particles, and particles of a conductive substance-coated core material composed of inorganic or organic material.

Examples of flame retardants include a phosphorus-based flame retardant. The phosphorus-based flame retardant may be any flame retardant as long as it contains a phosphorus atom in the molecule, and examples thereof include organic phosphorus compounds such as phosphates, condensed phosphates, phosphazene compounds and polyphosphates, and red phosphorus.

Examples of inorganic fillers include aluminum borate, calcium carbonate, silicon carbonate, silicon nitride, potassium titanate, basic magnesium sulfate, zinc oxide, graphite, calcium sulfate, magnesium borate, magnesium oxide, and silicate minerals. In particular, silicate minerals are preferably used. Examples of commercially available silicate minerals include THIXOTROPIC AGENT DT 5039 (manufactured by Huntsman Japan KK).

Examples of internal release agents include metallic soaps, vegetable waxes such as polyethylene wax and carnauba wax, fatty acid ester release agents, silicone oils, animal waxes, and fluorine-based nonionic surfactants. Examples of commercially available internal release agents include MOLD WIZ (registered trademark), INT1846 (manufactured by AXEL PLASTICS RESEARCH LABORATORIES INC.), Licowax S, Licowax P, Licowax OP, Licowax PE190, Licowax PED (manufactured by Clariant Japan K.K.), and stearyl stearate (SL-900A; manufactured by Riken Vitamin Co., Ltd.).

The epoxy resin composition of the present invention may contain, in addition to the resin particles F, a thermoplastic resin as a component to be dissolved in the epoxy resin composition. The thermoplastic resin improves the fracture toughness and impact resistance of the obtained fiber-reinforced composite material. Such thermoplastic resins may be dissolved in the epoxy resin composition during the curing process of the epoxy resin composition.

Specific examples of thermoplastic resins include polyethersulfone, polysulfone, polyetherimide, and polycarbonate. These may be used alone or in combination of two or more.

The thermoplastic resin is particularly preferably polyethersulfone or polysulfone having a weight average molecular weight (Mw) in the range of 8,000 to 100,000 as measured by gel permeation chromatography. The weight average molecular weight (Mw) of 8,000 or more imparts sufficient impact resistance to the obtained FRP, and that of 100,000 or less does not impart significantly increased viscosity and thus enables to obtain the epoxy resin composition exhibiting good handleability.

The thermoplastic resin preferably has a uniform molecular weight distribution, and the polydispersity (Mw/Mn), the ratio of the weight average molecular weight (Mw) to the number average molecular weight (Mn), is preferably 1 to 10, and more preferably 1.1 to 5.

The thermoplastic resin preferably has a reactive group having reactivity with the epoxy resin or a functional group forming a hydrogen bond with the epoxy resin. Such thermoplastic resins can improve the dissolution stability of the epoxy resin during the curing process. In addition, fracture toughness, chemical resistance, heat resistance, and wet heat resistance can be imparted to the fiber-reinforced composite material obtained after curing.

The reactive groups having reactivity with the epoxy resin are preferably a hydroxy group, a carboxylic acid group, an imino group, an amino group, and the like. Hydroxy-terminated polyethersulfone is more preferably used due to the particularly excellent impact resistance, fracture toughness and solvent resistance of the obtained fiber-reinforced composite material.

The content of the thermoplastic resin contained in the epoxy resin composition is appropriately adjusted depending on the viscosity. The thermoplastic resin is, when contained, from the viewpoint of impregnation into the reinforcing fiber base material, preferably 0.1 to 10 parts by mass, and more preferably 0.5 to 5 parts by mass with respect to 100 parts by mass of the epoxy resin contained in the epoxy resin composition. Containing the amount of 0.1 parts by mass or more allows the obtained fiber-reinforced composite material to exhibit sufficient fracture toughness and impact resistance. The thermoplastic resin content of 10 parts by mass or less does not impart significantly increased viscosity to the epoxy resin composition, which facilitates impregnation into the reinforcing fiber base material, and thus improves the properties of the obtained fiber-reinforced composite material.

Thermoplastic resins preferably contain reactive aromatic oligomers having amine end groups (hereinafter also simply referred to as "aromatic oligomer").

The epoxy resin composition becomes high molecular weight due to a curing reaction between the epoxy resin and the curing agent during heat curing. The expansion of a two-phase region due to the increased molecular weight causes reaction-induced phase separation by the aromatic oligomer dissolved in the epoxy resin composition. The phase separation causes a two-phase resin structure, in which the cured epoxy resin and the aromatic oligomer are bicontinuous, to be formed in the matrix resin. In addition, having amine end groups, the aromatic oligomers also react with epoxy resins. Since each phase in this bicontinuous two-phase structure is strongly bonded to each other, solvent resistance is also improved.

The bicontinuous structure absorbs external impact on the fiber-reinforced composite material and suppresses crack propagation. As a result, fiber-reinforced composite material produced using epoxy resin compositions containing reactive aromatic oligomers having amine end groups has high impact resistance and fracture toughness.

As the aromatic oligomer, known polysulfones having amine end groups and polyether sulfones having amine end groups can be used. The amine end groups are preferably primary amine ($-NH_2$) end groups.

The aromatic oligomer, when blended into the epoxy resin composition, preferably has a weight average molecular weight of 8,000 to 40,000 as measured by gel permeation chromatography. The weight average molecular weight of 8,000 or more is highly effective for improving the toughness of the matrix resin. In addition, weight average molecular weight of 40,000 or less does not impart excessively increased viscosity to the resin composition, and thus gives processing advantages such as facilitating impregnation of the resin composition into the reinforcing fiber base material.

Aromatic oligomers of commercially available products such as "Virantage DAMS VW-30500 RP (registered trademark)" (manufactured by Solvay Specialty Polymers) can be preferably used.

The form of the thermoplastic resin is preferably particulate before blending into the epoxy resin composition. The particulate form of thermoplastic resin can be uniformly blended and dissolved in the resin composition.

[Properties of epoxy resin composition]

The epoxy resin composition of the present invention can have the following preferred properties.

The epoxy resin composition of the present invention has a viscosity at 100°C of preferably 300 mPa·s or less, more preferably 50 mPa·s or less, more preferably 30 mPa·s or less, and particularly preferably 20 mPa·s or less. The viscosity at 100°C is preferably 0.1 mPa s or more, and more preferably 0.5 mPa s or more. The viscosity at 100°C of 300 mPa·s or less can facilitate impregnation of the epoxy resin composition into the reinforcing fiber base material, and thus can prevent the obtained fiber-reinforced composite material from forming voids that cause deterioration of the physical properties. Note that the relationship between viscosity and impregnatability also depends on the composition of the reinforcing fiber base material.

The pot life of the epoxy resin composition of the present invention varies depending on the molding conditions of the fiber-reinforced composite material. When a large fiber-reinforced composite material is produced using a resin transfer molding method (RTM method) and performing impregnation into a fiber base material at a relatively low impregnation pressure, the pot life is preferably 40 minutes or longer, more preferably 60 minutes or longer, more preferably 90 minutes or longer, more preferably 180 minutes or longer, and particularly preferably 300 minutes or longer. Here, the pot life is the time until the viscosity reaches 50 mPa·s while the temperature is kept at 100°C.

In accordance with the present invention, an epoxy resin composition can be obtained which is cured at 180°C for 30 minutes to give a cured product exhibiting a DSC cure degree $\alpha$ of 98% or more as represented by the following formula.

$$\alpha = (\Delta H \text{ uncured} - \Delta H \text{ cured product}) / \Delta H \text{ uncured} \times 100$$

(wherein $\Delta$H is a calorific value of a curing reaction confirmed when DSC measurement is performed at a temperature increase rate of 20°C/minute, $\Delta$H uncured is $\Delta$H of an uncured epoxy resin composition, and $\Delta$H cured product is $\Delta$H of a resin cured product.)

That is, the epoxy resin composition of the present invention is an epoxy resin composition which is cured at 180°C for 30 minutes to give a cured product exhibiting a DSC cure degree $\alpha$ of 98% or more as represented by the above formula. The DSC cure degree $\alpha$ of 98% or more can impart excellent heat resistance and mechanical properties and can suppress a change in physical properties over time.

[Resin cured product]

The present invention is also a resin cured product obtained by curing the above epoxy resin composition.

The resin cured product has a glass transition temperature of preferably 150°C or higher, more preferably 180°C or higher, and particularly preferably 200°C or higher. The glass transition temperature of lower than 150°C imparts insufficient heat resistance for industrial applications, which is not preferable.

The resin cured product has a glass transition temperature at water absorption of preferably 120°C or higher, and more preferably 140°C or higher. The glass transition temperature at water absorption of lower than 120°C imparts insufficient heat resistance for industrial applications, which is not preferable.

The resin cured product has a flexural modulus of preferably 3.0 GPa or higher, more preferably 3.3 GPa or higher, as particularly preferably 3.5 GPa or higher, as measured by JIS K7171 method. The flexural modulus of lower than 3.0 GPa tends to lower the properties of the fiber-reinforced composite material obtained using the epoxy resin composition, which is not preferable.

When the epoxy resin D and the epoxy resin E are used as the epoxy base resin of the epoxy resin composition, and the resin particles F are further blended, the resin cured product obtained by heating the resin composition of the present invention at 180°C for 40 minutes can have the following preferred properties.

The resin cured product has a cure degree of preferably 70% or more, more preferably 80% or more, and particularly preferably 90% or more. The cure degree is evaluated by dielectric cure degree measurement. The cure degree within this range enables the production of the fiber-reinforced composite material with high productivity.

The resin cured product has a glass transition temperature in a dry state (dry-Tg) of preferably 140°C or higher, more preferably 170°C or higher, and particularly preferably 180°C or higher.

The resin cured product has a glass transition temperature at saturated water absorption (wet-Tg) of preferably 120°C or higher, and more preferably 150 to 200°C.

The resin cured product has a room temperature dry flexural modulus (RTD-FM) of preferably 3.0 GPa or higher, more preferably 3.3 to 10.0 GPa, and more preferably 3.5 to 9.0 GPa, as measured by JIS K7171 method. The room temperature dry flexural modulus (RTD-FM) of 3.0 GPa or higher imparts excellent mechanical properties to the obtained fiber-reinforced composite material.

The resin cured product has a flexural modulus after high temperature water absorption (HTW-FM) of preferably 2.4 GPa or higher, more preferably 2.5 to 9.0 GPa, and particularly preferably 2.8 to 8.0 GPa, as measured by JIS K7171 method.

The resin cured product has a deformation mode I critical stress intensity factor KIc of preferably 0.7 MPa·$m^{1/2}$ or higher, and more preferably 0.8 to 3.0 MPa·$m^{1/2}$, as measured by ASTM D5045.

[Fiber-reinforced composite material]

The present invention is also a fiber-reinforced composite material containing the resin cured product and a reinforcing fiber base material. The fiber-reinforced composite material can be obtained by compositing and curing a reinforcing fiber base material and the epoxy resin composition of the present invention. A carbon reinforcing fiber base material is preferably used as the reinforcing fiber base material. Curing can be performed by heating.

Examples of fibers for the reinforcing fiber base material include carbon fiber, glass fiber, aramid fiber, silicon carbide fiber, polyester fiber, ceramic fiber, alumina fiber, boron fiber, metal fiber, mineral fiber, rock fiber, and slag fiber.

Among these reinforcing fibers, carbon fiber, glass fiber, and aramid fiber are preferred. Carbon fiber has good specific tensile strength and specific modulus, and provides a lightweight and high-strength fiber-reinforced composite material, and is thus more preferable. Among carbon fibers, polyacrylonitrile (PAN)-based carbon fiber is particularly preferable due to the excellent tensile strength.

PAN-based carbon fiber, when used as the reinforcing fiber, preferably has a tensile modulus of 100 to 600 GPa, more preferably 200 to 500 GPa, and more preferably 230 to 450 GPa. The tensile strength is preferably 2,000 to 10,000 MPa, and more preferably 3,000 to 8,000 MPa.

Carbon fiber, when used as reinforcing fiber, preferably has a diameter of 4 to 20 μm, and more preferably 5 to 10 μm. Use of such carbon fiber enables to improve the mechanical properties of the obtained fiber-reinforced composite material.

In the present invention, the reinforcing fibers are preferably treated with a sizing agent. In this case, the attached amount of the sizing agent, with respect to the mass of the sizing agent-attached reinforcing fiber, is preferably 0.01 to 10 mass%, more preferably 0.05 to 3.0 mass%, and more preferably 0.1 to 2.0 mass%. The more the sizing agent is attached, the stronger the adhesion between the reinforcing fiber and the matrix resin tends to be. On the other hand, the less the sizing agent is attached, the more excellent interlaminar toughness the obtained composite material tends to exhibit.

As a reinforcing fiber base material, preferably used is a reinforcing fiber sheet in which reinforcing fibers are formed in a sheet shape. Examples of reinforcing fiber sheets include a sheet of unidirectionally drawn and aligned multiple reinforcing fibers, bidirectional fabrics such as plain fabrics and twill fabrics, multiaxial fabrics, nonwoven fabrics, mats, knits, braids, and paper made by papermaking of reinforcing fibers. Among them, use of base material of a unidirectionally drawn and aligned sheet, a bidirectional fabric, or a multiaxial fabric in which reinforcing fibers as continuous fibers are formed into a sheet shape enables to obtain a fiber-reinforced composite material having more excellent mechanical properties, which is preferable.

The base material of bidirectional fabric or multiaxial fabric may be prepared by laminating and stitching a plurality of unidirectionally drawn and aligned sheets. In this case, in order to improve the interlaminar toughness of the obtained fiber-reinforced composite material, the fabric may be prepared by arranging a nonwoven fabric layer of a thermoplastic resin on one side of the unidirectionally drawn and aligned sheet and then laminating it. Examples of thermoplastic resin nonwoven fabric layers include polyester resin fibers, polyamide resin fibers, polyethersulfone resin fibers, polysulfone resin fibers, polyetherimide resin fibers, polycarbonate resin fibers, and fibers composed of resin mixtures thereof.

The basis weight and the number of layers of the unidirectionally drawn and aligned sheet can be appropriately set according to the applications of the fiber-reinforced composite material. For example, the basis weight of the unidirectionally drawn and aligned sheet is, for example, 100 to 300 g/$m^2$, and preferably 150 to 250 g/$m^2$. The thickness of one layer of the unidirectionally drawn and aligned sheet of the reinforcing fiber base material is preferably 0.01 to 3 mm, and more preferably 0.05 to 1.5 mm.

The present invention provides a fiber-reinforced composite material comprising an epoxy resin cured product obtained by curing the epoxy resin composition of the present invention and a reinforcing fiber base material.

The fiber-reinforced composite material provided by the present invention has a compression-after-impact (CAI) strength (impact energy 30.5 J), as measured by ASTM D7136, of preferably 240 MPa or more, more preferably 250 to 400 MPa, and more preferably 260 to 380 MPa.

The fiber-reinforced composite material provided by the present invention has a room temperature dry open-hole compression strength (RTD-OHC), as measured by SACMA SRM3, of preferably 260 MPa or more, more preferably 280 to 450 MPa, and more preferably 300 to 400 MPa.

The fiber-reinforced composite material provided by the present invention has an open-hole compression after

high temperature water absorption (HTW-OHC) strength, as measured by SACMA SRM3, of preferably 200 MPa or more, more preferably 220 to 400 MPa, and more preferably 240 to 350 MPa.

[Production method]

Hereinafter, the curing agent composition (curing agent liquid) for thermosetting resin, the epoxy base resin liquid, and the epoxy resin composition will be described in this order.

[Method for producing curing agent composition (curing agent liquid) for thermosetting resin]

The curing agent composition for thermosetting resin of the present invention can be produced by mixing the curing agent A, the curing agent B, and the curing agent C. The order of mixing does not matter.

A temperature of the curing agent composition for thermosetting resin during mixing is preferably 50 to 200°C, more preferably 50 to 150°C, and particularly preferably 80 to 120°C. The temperature higher than 200°C may allow the added components to thermally decompose, which is not preferable. On the other hand, the temperature lower than 50°C leaves the solid curing agent A and C unmelted and unlikely to melt into the curing agent B, making it difficult to obtain a liquid state of the curing agent composition for thermosetting resin, which is not preferable.

The obtained curing agent composition for thermosetting resin (curing agent liquid) may be in a one-component state in which each component is uniformly mixed.

[Method for producing epoxy base resin liquid]

The epoxy base resin liquid used for producing the epoxy resin composition of the present invention can be produced by mixing the components of the epoxy base resin. The order of mixing does not matter.

Any conventionally known method may be used to produce the epoxy base resin liquid. The mixing temperature is, for example, 40 to 200°C, preferably 50 to 100°C, and more preferably 50 to 90°C. The temperature higher than 200°C may cause partial progress of the self-polymerization reaction in the epoxy resin, which results in a decrease in the impregnation property into the reinforcing fiber base material, and may reduce the physical properties of the cured product produced using the obtained epoxy base resin liquid. On the other hand, the temperature lower than 40°C may impart high viscosity to the epoxy base resin, which may substantially make the mixing difficult.

The obtained epoxy base resin liquid may be in a one-component state in which each component is uniformly mixed, or may be in a slurry state in which a part of components are dispersed as solids.

[Method for producing epoxy resin composition]

The epoxy resin composition of the present invention can be produced by mixing the curing agent composition (curing agent liquid) for thermosetting resin and the epoxy base resin liquid described above. Preferably, the composition can be produced by further adding resin particles F and mixing. In this case, the resin particles F may be mixed with the curing agent liquid after mixing with the epoxy base resin liquid and, or may be mixed with the curing agent liquid and then with the epoxy base resin liquid.

The obtained epoxy resin composition may be in a one-component state in which each component is uniformly mixed, or may be in a slurry state in which a part of components are dispersed as solids.

The temperature during mixing is, for example, 40 to 180°C, preferably 50 to 160°C, and more preferably 50 to 120°C. The temperature higher than 180°C may cause immediate progress of the curing reaction, which results in a decrease in the impregnation property into the reinforcing fiber base material, and may reduce the physical properties of the cured product. On the other hand, the temperature lower than 40°C may impart high viscosity to the epoxy base resin, which may substantially make the mixing difficult.

[Equipment used for mixing]

In all production of the curing agent composition (curing agent liquid) for thermosetting resin, the epoxy base resin liquid, and the epoxy resin composition, conventionally known equipment can be used for mixing. Examples thereof include roll mills, planetary mixers, kneaders, extruders, Banbury mixers, mixing vessels equipped with stirring blades, and horizontal mixing tanks.

In each production, mixing may be performed in air or in an inert gas atmosphere. The production in air is preferably performed in an atmosphere of a controlled temperature and humidity, preferably in an atmosphere at a temperature controlled constant of 30°C or lower or at a low humidity of relative humidity of 50% RH or lower.

[Method for producing fiber-reinforced composite material]

A fiber-reinforced composite material is obtained by compositing the epoxy resin composition and the reinforcing fiber base material. This compositing may be performed during molding of the fiber-reinforced composite material, or in advance before molding.

There can be used a molding method of a resin transfer molding method (hereinafter also referred to as "RTM method"), a hand lay-up method, a filament winding method, a pultrusion method, an autoclave molding method, and a press molding method.

The epoxy resin composition of the present invention is particularly suitable for the RTM method. Here, the RTM method is a method for obtaining a fiber-reinforced composite material by impregnating a reinforcing fiber base material placed in a mold with a liquid epoxy resin composition and curing the composition. From the viewpoint of efficiently obtaining a fiber-reinforced composite material with a complicated shape, the RTM method is a preferable molding method.

The mold used in the RTM method may be a closed mold made of a rigid material, or an open mold made of a rigid material and a flexible film (bag). In the latter case, the reinforcing fiber base material can be placed between an open mold of rigid material and the flexible film. There can be used rigid materials of, for example, metals such as steel and aluminum, fiber-reinforced plastics, wood, and gypsum. There can be used materials for the flexible film of, for example, polyamide, polyimide, polyester, fluororesin, and silicone resin.

When a closed mold made of a rigid material is used in the RTM method, it is a common practice to press and clamp the mold and to pressurize and inject the epoxy resin composition. In this case, a suction port may be provided separately from the injection port and connected to a vacuum pump for suction. The epoxy resin composition may be injected only at atmospheric pressure by suction without using special pressurizing means. This method allows to provide a plurality of suction ports to manufacture a large-sized member, and thus can be suitably used.

When an open mold made of a rigid material and a flexible film are used in the RTM method, the epoxy resin composition may be injected only at atmospheric pressure by suction without using special pressurizing means. A resin diffusion medium is effectively used for achieving good impregnation by injection only at atmospheric pressure. Further, a gel coat is preferably applied to a surface of the rigid material before placing of the reinforcing fiber base material.

In the RTM method, a reinforcing fiber base material is impregnated with an epoxy resin composition, and then heat cured. The mold temperature during heat curing is generally higher than the mold temperature during injection of the epoxy resin composition, and preferably 80 to 200°C. The heat curing time is preferably 1 minute to 20 hours.

After heat curing is completed, the fiber-reinforced composite material is demolded and taken out. The obtained fiber-reinforced composite material may then be post-cured by heating at a higher temperature. The temperature for the post-curing is preferably 150 to 200°C, and the time is preferably 1 minute to 4 hours.

The impregnation pressure when impregnating the reinforcing fiber base material with the epoxy resin composition by the RTM method is appropriately determined in consideration of the viscosity and resin flow of the resin composition. A specific impregnation pressure is, for example, 0.001 to 10 MPa, and preferably 0.01 to 1 MPa. When a fiber-reinforced composite material is obtained using the RTM method, the viscosity of the epoxy resin composition at 100°C is preferably 1 to 200 mPa·s, more preferably 1 to 50 mPa s, more preferably 1 to 30 mPa s, and particularly preferably 1 to 20 mPa·s. The viscosity more than 200 mPa·s makes it difficult for the epoxy resin composition to impregnate into the reinforcing fiber base material.

In the molding by the RTM method, the timing of mixing the curing agent liquid and the epoxy base resin liquid to obtain the epoxy resin composition is preferably just before impregnating the reinforcing fiber base material with the epoxy resin composition.

The curing agent composition for thermosetting resin of the present invention, though having high reactivity with epoxy resins, is mixed with epoxy resins just before impregnation to form an epoxy resin composition, which enables a sufficient amount of the epoxy resin composition to impregnate inside the reinforcing fiber base material before the viscosity of the epoxy resin composition is increased. Therefore, the produced fiber-reinforced composite material does not contain defects such as voids, and is excellent in compression performance and damage tolerance.

Thus, according to the present invention, a method for producing a fiber-reinforced composite material is provided. That is, provided is a method for producing a fiber-reinforced composite material comprising a step of impregnating a reinforcing fiber base material with the epoxy resin composition of the present invention to form an impregnated base material, and a step of curing the impregnated base material obtained in the above step.

In this production method, the step of impregnating the reinforcing fiber base material with the epoxy resin composition of the present invention to form an impregnated base material preferably corresponds to the step of impregnating the reinforcing fiber base material placed in the mold with the epoxy resin composition of the present invention to form an impregnated base material, and the step of curing the impregnated base material obtained in the above step preferably corresponds to the step of heat curing the impregnated base material.

Further, it is preferable that a step of preparing the epoxy resin composition of the present invention is included

just before the step of impregnating the reinforcing fiber base material with the epoxy resin composition of the present invention to form an impregnated base material.

[Examples]

The present invention will be described in more detail below with reference to examples. Components and evaluation methods used in Examples and Comparative examples are described below. A fiber-reinforced composite material is sometimes abbreviated as "FRP", and a carbon fiber reinforced composite material as "CFRP".

1. Raw material for epoxy resin composition

The following materials were used as raw materials.

(1) Curing agent A

- 4,4'-Diamino-3,3'-diisopropyl-5,5'-dimethyldiphenylmethane (Lonzacure M-MIPA (product name) manufactured by Lonza, hereinafter abbreviated as "M-MIPA", melting point 70°C, solid at 25°C)
- 4,4'-Diamino-3,3'-diethyl-5,5'-dimethyldiphenylmethane (MED-J (product name) manufactured by KUMIAI CHEMICAL INDUSTRY CO., LTD., hereinafter abbreviated as "MED-J", melting point 76 °C, solid at 25°C)

(2) Curing agent B

- Diethyltoluenediamine (Heart Cure 10 (product name) manufactured by KUMIAI CHEMICAL INDUSTRY CO., LTD., hereinafter abbreviated as "DETDA", liquid at 25°C)
- Dimethylthiotoluene diamine (Heart Cure 30 (product name) manufactured by KUMIAI CHEMICAL INDUSTRY CO., LTD., hereinafter abbreviated as "DMTDA", liquid at 25°C)
- 4,4'-Diamino-3,3'-diethyldiphenylmethane (KAYAHARD A-A (product name) manufactured by Nippon Kayaku Co., Ltd., hereinafter abbreviated as "KAYAHARD AA", liquid at 25°C)

(3) Curing agent C

- 3,4'-Diaminodiphenyl ether (manufactured by Teijin Limited, hereinafter abbreviated as "3,4'-DAPE", melting point 80°C, solid at 25°C)
- 2,2-bis[4-(4-Aminophenoxy)phenyl]propane (manufactured by Tokyo Chemical Industry Co., Ltd., hereinafter abbreviated as "BAPP", melting point 129°C, solid at 25°C)
- 1,3-bis(4-Aminophenoxy)benzene (manufactured by Tokyo Chemical Industry Co., Ltd., hereinafter abbreviated as "TPE-R", melting point 116°C, solid at 25°C)
- 1,3-bis(3-Aminophenoxy)benzene (manufactured by Tokyo Chemical Industry Co., Ltd., hereinafter abbreviated as "APB", melting point 108°C, solid at 25°C)
- 2,6-Diaminotoluene (manufactured by Tokyo Chemical Industry Co., Ltd., hereinafter abbreviated as "DAT", melting point 106°C, solid at 25°C)
- m-Phenylenediamine (manufactured by FUJIFILM Wako Pure Chemical Corporation, hereinafter abbreviated as "MPD", melting point 65°C, solid at 25°C) (4) Epoxy resin D
- Tetraglycidyl-4,4'-diaminodiphenylmethane (Araldite MY721 (product name) manufactured by Huntsman Corporation, hereinafter abbreviated as "4,4'-TGDDM")
- Tetraglycidyl-3,4'-diaminodiphenyl ether (This was synthesized by the method described in Synthesis Example 1 below. Hereinafter, it is abbreviated as "3,4'-TGDDE".)

[Synthesis Example 1]

Synthesis of 3,4'-TGDDE

Epichlorohydrin (1,110.2 g, 12.0 mol) was charged in a four-necked flask equipped with a thermometer, a dropping funnel, a condenser, and a stirrer, and heated to a temperature of 70°C while purging with nitrogen, thereto added dropwise over 4 hours was 3,4'-diaminodiphenyl ether (200.2 g, 1.0 mol) dissolved in ethanol (1,000 g). The reaction solution was further stirred for 6 hours to complete the addition reaction and give N,N,N',N'-tetrakis(2-hydroxy-3-chloropropyl)-3,4'-diaminodiphenyl ether. Subsequently, the inside of the flask was cooled to a temperature of 25°C, thereto added dropwise over 2 hours was a 48% NaOH aqueous solution (500.0 g, 6.0 mol), and the mixture was further stirred for 1 hour. After completion of the cyclization reaction, ethanol was distilled off, extraction was performed with toluene (400 g), and washing was performed twice with 5% saline. Toluene and epichlorohydrin were removed from the organic layer under reduced pressure to give a brown viscous liquid (361.7 g, yield 85.2%) containing 3,4'-TGDDE as a main component. The purity of the main product of 3,4'-TGDDE was 84% (HPLC area%).

(5) Epoxy resin E

- N,N-Diglycidyl-o-toluidine (GOT (product name) manufactured by Nippon Kayaku Co., Ltd., hereinafter abbreviated as "GOT")
- N,N-Diglycidylaniline (GAN (product name) manufactured by Nippon Kayaku Co., Ltd., hereinafter abbreviated as "GAN")
- Triglycidyl-p-aminophenol (Araldite MY0510 (product name) manufactured by Huntsman Corporation, hereinafter abbreviated as "TG-pAP")
- 1,6-bis(Glycidyloxy)naphthalene (HP-4032SS (product name) manufactured by DIC Corporation, hereinafter abbreviated as "1,6-DON")
- 1,3,5-Triglycidyl isocyanurate (TEPIC-S (product name) manufactured by Nissan Chemical Corporation, hereinafter abbreviated as "TEPIC")
- Bisphenol A-diglycidyl ether (jER825 (product name) manufactured by Mitsubishi Chemical Corporation, hereinafter abbreviated as "DGEBA")

(6) Resin particles F (particulate rubber component)

- MX-416 (MX-416 (product name) manufactured by Kaneka Corporation, a masterbatch in which a particulate butadiene rubber component is dispersed in a glycidylamine-type tetrafunctional epoxy resin to a concentration of 25 mass%) (the glycidylamine-type tetrafunctional epoxy resin in this product corresponds to the epoxy resin D of the present invention)

(7) Carbon fiber strand

- Carbon fiber 1: "Tenax (registered trademark)" IMS65 E23 830tex (carbon fiber strand, tensile strength 5.8 GPa, tensile modulus 290 GPa, sizing agent attached amount 1.2 mass%, manufactured by Teijin Limited)

(8) Thermoplastic resin nonwoven fabric

- Nonwoven fabric 1: Nonwoven fabric with a fiber basis weight of 5 g/$m^2$ produced by a spunbonding method using polyamide 12 resin

(9) Carbon fiber multilayer fabric

- Carbon fiber multiaxial fabric 1: Unidirectionally drawn and aligned Carbon fiber 1 is formed into a sheet shape of 190 g/$m^2$ per layer, and Nonwoven fabric 1 is arranged on one side of the sheet-shaped carbon fiber, 4 sheets of which are laminated at the angles of (+45/V/90/V/-45/V/0/V) and stitched (total basis weight of carbon fiber in fabric base material: 760 g/$m^2$).
- Carbon fiber multiaxial fabric 2: Unidirectionally drawn and aligned Carbon fiber 1 is formed into a sheet shape of 190 g/$m^2$ per layer, and Nonwoven fabric 1 is arranged on one side of the sheet-shaped carbon fiber, 4 sheets of which are laminated at the angles of (-45/V/90/V/+45/V/0/V) and stitched (total basis weight of carbon fiber in fabric base material: 760 g/$m^2$). Here, V represents Nonwoven fabric 1.

2. Evaluation method

Evaluation was performed by the following methods.

(A) Evaluation method for curing agent composition and epoxy resin composition

Evaluations of Examples 1 to 25 and Comparative examples 1 to 6 were performed as follows.

(A-1) Properties of Curing Agent Composition

(A-1-1) Preparation of curing agent composition

Curing agents were weighed in the proportions listed in Tables 1 to 3 and mixed using a stirrer at an appropriate temperature of 90 to 110°C for 60 minutes to prepare a curing agent composition.

(A-1-2) Liquid state retention property of curing agent composition

The curing agent composition prepared above was stored at room temperature for one week, and it was visually examined whether solid components were precipitated. "OK" was given when there was no precipitation, and "NG" was given when precipitation was observed.

(A-2) Properties of epoxy resin composition

(A-2-1) Preparation of epoxy resin composition

The curing agent composition prepared above, the epoxy resin, and the particulate rubber component were weighed in the proportions shown in Tables 1 to 3, and mixed using a stirrer at 80°C for 60 minutes to prepare an epoxy resin composition. Note that, in the compositions shown in Tables 1 to 3, the epoxy groups of the epoxy resin and the active hydrogens of the curing agent are equivalent.

(A-2-2) Initial viscosity and pot life of epoxy resin composition

The initial viscosity was measured at 100°C using a B-type viscometer TVB-15M manufactured by Toki Sangyo Co., Ltd. The minimum measured value obtained immediately after the start of measurement was taken as the initial viscosity, and the time until the viscosity reached 50 mPa·s was taken as the pot life.

(A-3) Properties of resin cured product

(A-3-1) Preparation of resin cured product

The epoxy resin composition prepared above was defoamed in vacuum, and then injected into a stainless steel mold set to give a thickness of 4 mm using a 4 mm-thick silicone resin spacer. The composition was cured at a temperature of 180°C for 30 minutes to obtain a resin cured product having a thickness of 4 mm.

(A-3-2) Cure degree

DSC measurement was performed, and the cure degree $\alpha$ was calculated using the following formula.

$$\alpha = (\Delta H\ \text{uncured} - \Delta H\ \text{cured product}) / \Delta H\ \text{uncured} \times 100$$

(wherein ΔH is a calorific value of a curing reaction confirmed when DSC measurement is performed at a temperature increase rate of 20°C/minute, ΔH uncured is ΔH of an epoxy resin composition, and ΔH cured product is ΔH of a resin cured product.)

(A-3-3) Glass transition temperature after water absorption (wet-Tg)

The glass transition temperature was measured in accordance with the SACMA 18R-94 method. The resin cured product obtained above was cut into a size of 50 mm × 6 mm × 2 mm to prepare a test piece. Using a pressure cooker (HASTEST PC-422R8, manufactured by ESPEC Corp.), the prepared test piece was subjected to water absorption treatment under the conditions of 121°C, 24 hours, and saturated water vapor. Using a dynamic viscoelasticity measuring device Rheogel-E400 manufactured by UBM, under the conditions of the measurement frequency of 1 Hz, the temperature rise rate of 5 °C/min, and the strain of 0.0167%, the distance between the chucks was set to 30 mm, and the storage elastic modulus E' of the test piece subjected to water absorption treatment was measured in the temperature range of from 50°C to the rubber elastic region. Log E' was plotted against temperature, and the temperature obtained from the intersection of the approximate straight line of log E' in the flat region and that in the transition region was recorded as the glass transition temperature (Tg).

(A-3-4) Room temperature dry resin flexural modulus (RTD-FM)

The test was performed in accordance with the JIS K7171 method. The resin cured product obtained above was cut into a size of 80 mm × 10 mm × 4 mm (thickness h) to prepare a test piece. A bending test was performed under the conditions of an ambient temperature at 25°C, a distance L between fulcrums of 16 × h (thickness), and a test speed of 2 mm/min to measure bending strength and flexural modulus.

(A-3-5) Resin cured product toughness (deformation mode I critical stress intensity factor KIc)

In accordance with ASTM D5045, the toughness (KIc) was measured using a universal testing machine (Autograph manufactured by Shimadzu Corporation).

The resin cured product obtained above was cut into a size of 50 mm × 8 mm (width W) × 4 mm to prepare a test piece. The crack length 'a' was adjusted so that 0.45≤a/W≤0.55. Note that, length to the crack tip was measured by observing the fracture surface after the fracture test with an optical microscope, and the average value of the crack lengths on both surfaces of the test piece was adopted as the crack length 'a'.

(B) Properties of curing agent composition for thermosetting resin and epoxy resin composition

Examples 31 to 44, Comparative examples 11 to 15 and Reference examples 1 to 3 were evaluated as follows.

(B-1) Properties of curing agent composition for thermosetting resin

(B-1-1) Preparation of curing agent composition for thermosetting resin

Curing agent components were weighed in the proportions shown in Tables 4 to 6 and mixed using a stirrer at 80°C for 30 minutes to prepare a curing agent composition (curing agent liquid) for thermosetting resin.

(B-1-2) Preparation of epoxy base resin

Epoxy resin and resin particles were weighed in the proportions shown in Tables 4 to 6, and mixed using a stirrer at 80°C for 30 minutes to prepare an epoxy base resin liquid.

(B-1-3) Preparation of epoxy resin composition

The curing agent composition for thermosetting resin and the epoxy base resin liquid prepared above were mixed using a stirrer at 80°C for 30 minutes to prepare an epoxy resin composition. Note that, in the compositions shown in Tables 4 to 6, the glycidyl groups of the epoxy resin and the amino groups of the curing agent are equivalent.

(B-1-4) Liquid state retention property of curing agent composition (curing agent liquid)

The curing agent composition (curing agent liquid) for thermosetting resin prepared above was stored still standing at 25°C for 1 week, and it was visually examined whether solid components were precipitated. "OK" was given when there was no precipitation, and "NG" was given when precipitation was observed.

(B-1-5) Initial viscosity and pot life of epoxy resin composition

The initial viscosity was measured at 100°C using a B-type viscometer TVB-15M manufactured by Toki Sangyo Co., Ltd. The minimum measured value obtained immediately after the start of measurement was taken as the initial viscosity, and the time until the viscosity reached 50 mPa·s was taken as the pot life.

(B-1-6) Curing properties of epoxy resin composition after heating at 180°C for 40 minutes (DEA cure degree)

Curing property was evaluated as follows: curing property data were measured from a resin cured product obtained by heating an uncured resin at 180°C for 40 minutes using a dielectric analyzer DEA288 Ionic manufactured by NETZSCH, and DEA cure degree $\alpha$ was calculated from the data by the following formula and evaluated. When the cure degree is 90% or more, the epoxy resin composition can be evaluated as having a 40-minute curing property.

$$\alpha(t=40) = (\log\varepsilon''_0 - \log\varepsilon''_{t=40})/(\log\varepsilon''_0 - \log\varepsilon''_\infty)\times 100$$

(wherein, $\varepsilon''_0$ is the maximum value of dielectric loss at the start of measurement, $\varepsilon''_{t=40}$ is the dielectric loss value when the measurement time is 40 minutes, and $\varepsilon''_\infty$ is the dielectric loss value when the measurement time is 180 minutes.

Measurement conditions

Measurement temperature: 180±2°C isothermal
Measurement frequency: 1Hz
Measurement sensor: IDEX 115/35 manufactured by NETZSCH

(B-2) Properties of resin cured product

(B-2-1) Preparation of resin cured product

The epoxy resin composition prepared above was defoamed in vacuum for 60 minutes, and then injected into a stainless steel mold set to give a thickness of 4 mm using a 4 mm-thick Teflon resin spacer. The composition was heat cured at a temperature of 180°C for 40 minutes to obtain a resin cured product having a thickness of 4 mm.

(B-2-2) Glass transition temperature after water absorption (wet-Tg)

The glass transition temperature was measured in accordance with the SACMA 18R-94 method. The resin cured product obtained above was cut into a size of 50 mm × 6 mm × 2 mm to prepare a test piece. Using a pressure cooker (HASTEST PC-422R8, manufactured by ESPEC Corp.), the prepared test piece was subjected to water absorption treatment under the conditions of 121°C, 24 hours, and saturated water vapor. Using a dynamic viscoelasticity measuring device Rheogel-E400 manufactured by UBM, under the conditions of the measurement frequency of 1 Hz, the temperature rise rate of 5 °C/min, and the strain of 0.0167%, the distance between the chucks was set to 30 mm, and the storage elastic modulus E' of the test piece subjected to water absorption treatment was measured in the temperature range of from 50°C to the rubber elastic region. Log E' was plotted against temperature, and the temperature obtained from the intersection of the approximate straight line of log E' in the flat region and that in the transition region was recorded as the glass transition temperature (wet-Tg).

(B-2-3) Room temperature dry resin flexural modulus (RTD-FM)

The test was performed in accordance with the JIS K7171 method. The resin cured product obtained above was cut into a size of 80 mm × 10 mm × 4 mm (thickness h) to prepare a test piece. A bending test was performed

under the conditions of an ambient temperature at 25°C, a distance L between fulcrums of 16 × h (thickness), and a test speed of 2 mm/min to measure bending strength and flexural modulus.

(B-2-4) Resin cured product toughness (deformation mode I critical stress intensity factor KIc)

In accordance with ASTM D5045, the toughness (KIc) was measured using a universal testing machine (Autograph manufactured by Shimadzu Corporation).

The resin cured product obtained above was cut into a size of 50 mm × 8 mm (width W) × 4 mm to prepare a test piece. The crack length 'a' was adjusted so that $0.45 \leq a/W \leq 0.55$. Note that, length to the crack tip was measured by observing the fracture surface after the fracture test with an optical microscope, and the average value of the crack lengths on both surfaces of the test piece was adopted as the crack length 'a'.

(B-3) Properties of CFRP

(B-3-1) Preparation of CFRP

Carbon fiber multiaxial fabric 1 and Carbon fiber multiaxial fabric 2 each were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, a hose for forming a resin inlet port and a resin outlet port was arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared above was heated to 100°C and injected into the vacuum system through the resin inlet port.

The injected epoxy resin composition was filled in the bag and impregnated into the laminate, and then the temperature was raised to 180°C and held at 180°C for 40 minutes to obtain CFRP.

(B-3-2) Compression-after-impact (CAI) strength

The CFRP obtained above was cut into a size of 101.6 mm (width) × 152.4 mm (length) to obtain a test piece for a compression-after-impact (CAI) strength test. The test was performed in accordance with ASTM D7136. In the impact test, an impact energy of 30.5 J was applied to the test piece using a drop weight impact tester (Dynatup manufactured by Instron). After the impact, the damaged area of the test piece was measured with an ultrasonic crack inspector (SDS3600, HIS3/HF manufactured by Kraut Kramer). In the strength test, 4 strain gauges in total per body were attached to the impacted test piece, 2 gauges each at a position of 25.4 mm from the left side and right side and 25.4 mm from the top on the front side, and the same on the back side, and then the crosshead speed of the testing machine (Autograph manufactured by Shimadzu Corporation) was set at 1.27 mm/min, and a load was applied until the test piece broke.

(B-3-3) Room temperature dry open-hole compression strength (RTD-OHC)

The CFRP obtained in (B-3-1) above was cut to a size of 38.1 mm (width) × 304.8 mm (length) to form a test piece precursor, at the center of which a hole (diameter 6.35 mm) was drilled to obtain a test piece for room temperature dry open-hole compression strength (RTD-OHC) test. The test was performed in accordance with SACMA SRM3 at an ambient temperature of 25°C, and the open hole compression strength was calculated from the maximum point load.

(B-4) Average particle size

The cross section of the resin cured product was observed at a magnification of 25,000 times with a scanning electron microscope or transmission electron microscope, and the diameters of at least 50 particles are measured as resin particle sizes, which are averaged to obtain the average particle size. When the particle was not perfectly circular, the maximum diameter was taken as the particle size of the particle.

[Example 1]

(Preparation of curing agent composition for thermosetting resin)

Curing agents were weighed in the proportions listed in Table 1 and mixed using a stirrer at a temperature of 90°C for 60 minutes to prepare a curing agent composition for thermosetting resin.

(Preparation of epoxy resin composition)

The curing agent composition for thermosetting resin prepared above, the epoxy resin, and the particulate rubber component were weighed in the proportions shown in Table 1 and mixed using a stirrer at 80°C for 60 minutes to prepare an epoxy resin composition. Note that, in the compositions shown in Table 1, the epoxy groups of the epoxy resin and the active hydrogens of the curing agent are equivalent.

(Preparation of resin cured product)

The epoxy resin composition prepared above was defoamed in a vacuum, and then injected into a stainless steel mold set to give a thickness of 4 mm using a 4 mm-thick silicone resin spacer. The composition was cured at a temperature of 180°C for 30 minutes to obtain a resin cured product having a thickness of 4 mm.

[Table 1]

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Curing agent A | M-MIPA | (parts by mass) | 3.5 | 2.6 | 3.6 | 2.7 | 4.3 | 7.3 | 7.3 | 7.4 | 7.4 | 7.3 | 7.5 |
| | MED-J | (parts by mass) | | | | | | | | | | | |
| Curing agent B | DETDA | (parts by mass) | 8.7 | 8.6 | 8.0 | 8.0 | 12.0 | 10.0 | 9.1 | 10.2 | 9.3 | 10.1 | 9.4 |
| | DMTDA | (parts by mass) | 3.5 | 3.4 | 4.4 | 4.4 | | | | | | | |
| Curing agent C | 3,4'-DAPE | (parts by mass) | 1.7 | 2.6 | 1.8 | 2.7 | 0.9 | 0.9 | 1.8 | 0.9 | 1.9 | | |
| | BAPP | (parts by mass) | | | | | | | | | | | |
| | TPE-R | (parts by mass) | | | | | | | | | | 0.9 | 1.9 |
| | APB | (parts by mass) | | | | | | | | | | | |
| | DAT | (parts by mass) | | | | | | | | | | | |
| | MPD | (parts bv mass) | | | | | | | | | | | |
| Epoxy resin | 3,4'-TGDDE | (parts by mass) | 16.8 | 17.0 | 17.0 | 17.0 | 17.0 | 16.4 | 16.4 | 16.1 | 16.0 | 16.2 | 16.2 |
| | GOT | (parts by mass) | 13.9 | 14.0 | 14.1 | 14.1 | 14.0 | 13.7 | 13.7 | | | 13.6 | 13.6 |
| | GAN | (parts bv mass) | | | | | | | | 13.5 | 13.5 | | |
| Particulate rubber component | MX-416 | (parts by mass) | 12.0 | 12.1 | 12.2 | 12.2 | 12.0 | 12.1 | 12.1 | 12.0 | 12.0 | 12.0 | 12.1 |

(continued)

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Ratio of each component of curing agent composition for thermosetting resin | Ratio of curing agent A | (mass%) | 20 | 15 | 20 | 15 | 25 | 40 | 40 | 40 | 40 | 40 | 40 |
| | Ratio of curing agent B | (mass%) | 70 | 70 | 70 | 70 | 70 | 55 | 50 | 55 | 50 | 55 | 50 |
| | Ratio of curing agent C | (mass%) | 10 | 15 | 10 | 15 | 5 | 5 | 10 | 5 | 10 | 5 | 10 |
| Curing agent composition property | Liquid state retention property | | OK | OK | OK | OK | OK | OK | OK | OK | OK | OK | OK |
| Epoxy resin composition properties | Initial viscosity (100°C) | (mPa·s) | 24 | 25 | 22 | 22 | 22 | 24 | 25 | 30 | 31 | 25 | 26 |
| | Pot life | (min) | >120 | >120 | >120 | >120 | >120 | >120 | >120 | 93 | 83 | >120 | >120 |
| Resin cured product properties | Cure degree a | (%) | 100 | 100 | 100 | 100 | 100 | 100 | 100 | 100 | 100 | 100 | 100 |
| | wet-Tg | (°C) | 156 | 154 | 155 | 154 | 160 | 159 | 163 | 155 | 157 | 156 | 156 |
| | Flexural modulus | (GPa) | 3.4 | 3.4 | 3.4 | 3.4 | 3.2 | 3.4 | 3.3 | 3.6 | 3.6 | 3.3 | 3.4 |
| | KIc | ($MPa \cdot m^{1/2}$) | 0.86 | 0.85 | 0.89 | 0.85 | 0.87 | 0.88 | 0.89 | 0.85 | 0.83 | 0.90 | 0.91 |

Table 1 shows the evaluation results of the properties of the curing agent composition for thermosetting resin, the epoxy resin composition and the resin cured product. The curing agent composition for thermosetting resin maintained a liquid state for a period of one week or longer. The epoxy resin composition exhibited a low viscosity of 24 mPa s at 100°C, and the pot life exceeded 120 minutes. Note that, ">120" in the table means "more than 120". The cure degree $\alpha$ was 100%, which indicates fast curability. The resin cured product had a wet-Tg of 156°C, a flexural modulus of 3.4 GPa, and a KIc of 0.86 MPa·$m^{1/2}$, which indicates high mechanical properties.

[Examples 2 to 22]

The procedure was conducted in the same manner as in Example 1, except that the composition was changed as shown in Tables 1 and 2. The epoxy resin compositions were prepared at 90°C for Examples 2 to 9 and 15 to 22 and at 110°C for Examples 10 to 14. Tables 1 and 2 show the properties of the curing agent composition for thermosetting resin, the epoxy resin composition and the resin cured product. In all examples, the curing agent composition for thermosetting resin maintained a liquid state for a period of one week or longer. The epoxy resin composition exhibited a low viscosity of 32 mPa s or less at 100°C, and the pot life was 80 minutes or more in all examples. The cure degree $\alpha$ was 100% in all examples, which indicates fast curability. The resin cured product had a wet-Tg of 150°C or higher, a flexural modulus of 3.2 GPa or higher, and a KIc of 0.81 MPa·$m^{1/2}$ or higher, which indicates high mechanical properties.

[Table 2]

| | | | Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| Curing agent A | M-MIPA | (parts by mass) | 7.6 | 7.7 | 12.3 | 7.1 | 6.8 | 7.2 | 11.6 | | | | |
| | MED-J | (parts by mass) | | | | | | | | 2.6 | 3.5 | 2.5 | 4.2 |
| Curing agent B | DETDA | (parts by mass) | 10.4 | 9.6 | 7.1 | 9.7 | 8.5 | 9.9 | 6.8 | 6.9 | 8.6 | 8.5 | 11.8 |
| | DMTDA | (parts by mass) | | | | | | | | 5.2 | 3.5 | 3.4 | |
| Curing agent C | 3,4'-DAPE | (parts by mass) | | | | | | | | 2.6 | 1.7 | 2.5 | 0.8 |
| | BAPP | (parts by mass) | | | | | | | | | | | |
| | TPE-R | (parts by mass) | 0.9 | 1.9 | 1.0 | | | | | | | | |
| | APB | (parts by mass) | | | | | | | | | | | |
| | DAT | (parts by mass) | | | | | | | | | | | |
| | MPD | (parts bv mass) | | | | 0.9 | 1.7 | 0.9 | 1.0 | | | | |
| Epoxy resin | 3,4'-TGDDE | (parts by mass) | 16.1 | 15.8 | 15.2 | 16.9 | 17.0 | 16.5 | 15.6 | 17.0 | 17.0 | 17.0 | 17.0 |
| | GOT | (parts by mass) | | | | 14.0 | 14.0 | | | 14.0 | 14.0 | 14.0 | 14.0 |
| | GAN | (parts bv mass) | 13.6 | 13.4 | 13.1 | | | 13.8 | 13.3 | | | | |
| Particulate rubber component | MX-416 | (parts by mass) | 12.2 | 12.1 | 12.2 | 12.2 | 12.0 | 12.1 | 12.1 | 12.1 | 12.1 | 12.0 | 12.0 |

(continued)

| | | | Example | | | | | | | | | | |
|---|---|---|---|---|---|---|---|---|---|---|---|---|---|
| | | | 12 | 13 | 14 | 15 | 16 | 17 | 18 | 19 | 20 | 21 | 22 |
| Ratio of each component of curing agent composition for thermosetting resin | Ratio of curing agent A | (mass%) | 40 | 40 | 60 | 40 | 40 | 40 | 60 | 15 | 20 | 15 | 25 |
| | Ratio of curing agent B | (mass%) | 55 | 50 | 35 | 55 | 50 | 55 | 35 | 70 | 70 | 70 | 70 |
| | Ratio of curing agent C | (mass%) | 5 | 10 | 5 | 5 | 10 | 5 | 5 | 15 | 10 | 15 | 5 |
| Curing agent composition property | Liquid state retention property | | OK | OK | OK | OK | OK | OK | OK | OK | OK | OK | OK |
| Epoxy resin composition properties | Initial viscosity (100°C) | (mPa·s) | 30 | 31 | 32 | 24 | 25 | 28 | 30 | 23 | 21 | 22 | 21 |
| | Pot life | (min) | 93 | 83 | 109 | >120 | 96 | 80 | 94 | >120 | >120 | >120 | >120 |
| Resin cured product properties | Cure degree a | (%) | 100 | 100 | 100 | 100 | 100 | 100 | 100 | 100 | 100 | 100 | 100 |
| | wet-Tg | (°C) | 150 | 152 | 157 | 159 | 162 | 157 | 153 | 152 | 158 | 159 | 155 |
| | Flexural modulus | (GPa) | 3.6 | 3.6 | 3.6 | 3.5 | 3.4 | 3.7 | 3.6 | 3.4 | 3.4 | 3.4 | 3.3 |
| | KIc | ($MPa \cdot m^{1/2}$) | 0.87 | 0.88 | 0.96 | 0.86 | 0.82 | 0.81 | 0.87 | 0.82 | 0.85 | 0.82 | 0.92 |

[Examples 23 to 25]

The procedure was conducted in the same manner as in Example 1, except that the composition was changed as shown in Table 3. The epoxy resin compositions were prepared at 90°C for Examples 23 and 25 and at 110°C for Example 24. Table 3 shows the properties of the curing agent composition for thermosetting resin, the resin composition and the resin cured product. The curing agent composition for thermosetting resin maintained a liquid state for a period of one week or longer. The cure degree α was 100% in all examples, which indicates fast curability. The resin cured product had a wet-Tg of 156°C or higher, a flexural modulus of 3.2 GPa or higher, which indicates high mechanical properties.

[Table 3]

| | | | Example | | | Comparative example | | | | | |
|---|---|---|---|---|---|---|---|---|---|---|---|
| | | | 23 | 24 | 25 | 1 | 2 | 3 | 4 | 5 | 6 |
| Curing agent A | M-MIPA | (parts by mass) | 7.5 | 7.0 | 7.6 | 22.9 | | | 11.8 | 7.8 | 7.7 |
| | MED-J | (parts by mass) | | | | | | | | | |
| Curing agent B | DETDA | (parts by mass) | 9.4 | 8.7 | 9.5 | | | | 7.9 | | |
| | DMTDA | (parts by mass) | | | | | 17.6 | | | 11.8 | |
| Curing agent C | 3,4'-DAPE | (parts by mass) | | | | | | 17.1 | | | 11.6 |
| | BAPP | (parts by mass) | | | 1.9 | | | | | | |
| | TPE-R | (parts by mass) | | | | | | | | | |
| | APB | (parts by mass) | 1.9 | | | | | | | | |
| | DAT | (parts by mass) | | 1.7 | | | | | | | |
| | MPD | (parts bv mass) | | | | | | | | | |
| Epoxy resin | 3,4'-TGDDE | (parts by mass) | 16.2 | 16.9 | 16.0 | 13.3 | 16.3 | 17.0 | 15.7 | 15.5 | 15.9 |
| | GOT | (parts by mass) | 13.6 | 14.0 | 13.5 | 12.0 | 13.6 | 14.0 | 13.4 | 13.2 | 13.5 |
| | GAN | (parts by mass) | | | | | | | | | |
| Particulate rubber component | MX-416 | (parts by mass) | 12.1 | 12.1 | 12.1 | 12.0 | 11.9 | 12.0 | 12.2 | 12.1 | 12.2 |

(continued)

| | | | Example | | | Comparative example | | | | | |
|---|---|---|---|---|---|---|---|---|---|---|---|
| | | | 23 | 24 | 25 | 1 | 2 | 3 | 4 | 5 | 6 |
| Ratio of each component of curing agent composition for thermosetting resin | Ratio of curing agent A | (mass%) | 40 | 40 | 40 | 100 | 0 | 0 | 60 | 40 | 40 |
| | Ratio of curing agent B | (mass%) | 50 | 50 | 50 | 0 | 100 | 0 | 40 | 60 | 0 |
| | Ratio of curing agent C | (mass%) | 10 | 10 | 10 | 0 | 0 | 100 | 0 | 0 | 60 |
| Curing agent composition property | Liquid state retention property | | OK | OK | OK | NG | - | NG | - | - | NG |
| Resin cured product properties | Cure degree a | (%) | 100 | 100 | 100 | - | 91 | - | 97 | 95 | - |
| | wet-Tg | (°C) | 156 | 158 | 161 | - | - | - | - | - | - |
| | Flexural modulus | (GPa) | 3.3 | 3.5 | 3.2 | - | - | - | - | - | - |

[Comparative examples 1, 3 and 6]

The procedure was conducted in the same manner as in Example 1, except that the composition was changed as shown in Table 3. Table 3 shows the properties of the curing agent composition for thermosetting resin. In all examples, solids precipitated within one week.

[Comparative examples 2, 4 and 5]

The procedure was conducted in the same manner as in Example 1, except that the composition was changed as shown in Table 3. Table 3 shows the properties of the resin cured product. In all examples, the cure degree $\alpha$ was less than 98, which indicates insufficient fast curability.

[Example 31]

(Preparation of epoxy resin composition)

The epoxy resin and resin particles F were weighed in the proportions shown in Table 4, and mixed using a stirrer at 80°C for 30 minutes to prepare an epoxy base resin liquid. Curing agent components were weighed in the proportions shown in Table 4 and mixed using a stirrer at 80°C for 30 minutes to prepare a curing agent composition (curing agent liquid) for thermosetting resin. The epoxy base resin liquid and the curing agent composition (curing agent liquid) for thermosetting resin, which were separately prepared, were mixed using a stirrer at 80°C for 30 minutes to prepare an epoxy resin composition.

Table 4 shows the properties of the obtained epoxy resin composition. Note that, in the compositions shown in Table 4, the glycidyl groups of the epoxy resin and the amino groups of the curing agent are equivalent.

(Preparation of resin cured product)

The epoxy resin composition obtained above was defoamed in a vacuum for 60 minutes, and then injected into a stainless steel mold set to give a thickness of 4 mm using a 4 mm-thick Teflon resin spacer. The composition was heat cured at a temperature of 180°C for 40 minutes to obtain a resin cured product having a thickness of 4 mm.

Table 4 shows the properties of the obtained resin cured product. The resin cured product had a wet-Tg of

150°C or higher, a flexural modulus of 3.0 GPa or higher, and a KIc of 0.7 MPa·$m^{1/2}$ or higher, which indicates high mechanical properties.

(Production of fiber-reinforced composite material)

Next, Carbon fiber multiaxial fabric 1 and Carbon fiber multiaxial fabric 2 were cut to 300 × 300 mm, and 3 sheets of Carbon fiber multiaxial fabric 1 and 3 sheets of Carbon fiber multiaxial fabric 2, 6 sheets in total, were stacked on a release agent-treated aluminum plate of 500 × 500 mm to form a laminate.

Further, on the laminate stacked were a peel cloth of Release Ply C (manufactured by AIRTECH) of a base material imparted with a releasability function, and a resin diffusion base material of Resin Flow 90HT (manufactured by AIRTECH). Subsequently, a hose for forming a resin inlet port and a resin outlet port was arranged, the whole was covered with a nylon bag film and sealed with a sealant tape, and the inside was evacuated. Further, the aluminum plate was heated to 120°C, the pressure inside the bag was evacuated to 5 torr or less, and then the epoxy resin composition prepared above was heated to 100°C and injected into the vacuum system through the resin inlet port.

The injected epoxy resin composition was filled in the bag and impregnated into the laminate, and then the temperature was raised to 180°C and held at 180°C for 2 hours to obtain carbon fiber-reinforced composite material (CFRP). Table 4 shows the properties of the obtained CFRP. In all examples, exhibited were high CAI of 250 MPa or higher and excellent RTD-OHC of 300 MPa or higher.

[Examples 32 to 37]

The procedure was conducted in the same manner as in Example 31, except that the composition was changed as shown in Table 4. Table 4 shows the evaluation results.

[Table 4]

| | | | Example | | | | | | |
|---|---|---|---|---|---|---|---|---|---|
| | | | 31 | 32 | 33 | 34 | 35 | 36 | 37 |
| Curing agent A | M-MIPA | (parts by mass) | 23.5 | 18.0 | 17.6 | 18.0 | 16.8 | 17.2 | 8.8 |
| | MED-J | (parts by mass) | | | | | | | |
| Curing agent B | DETDA | (parts by mass) | 18.8 | 24.8 | 24.2 | 24.8 | 23.1 | 23.7 | 19.9 |
| | DMTDA | (parts by mass) | | | | | | | 11.0 |
| | Kavahard AA | (parts by mass) | | | | | | | |
| Curing agent C | 3,4'-DAPE | (parts by mass) | 4.7 | 2.3 | | | | | 4.4 |
| | TPE-R | (parts by mass) | | | 2.2 | 2.3 | | | |
| | MPD | (parts by mass) | | | | | 2.1 | 2.2 | |
| Epoxy resin D | 4,4'-TGDDM | (parts by mass) | | | | | | | |
| | 3,4'-TGDDE | (parts by mass) | 42.5 | 42.5 | 42.5 | 42.5 | 42.5 | 42.5 | 42.5 |

(continued)

| | | | Example | | | | | | |
|---|---|---|---|---|---|---|---|---|---|
| | | | 31 | 32 | 33 | 34 | 35 | 36 | 37 |
| Epoxy resin E | GOT | (parts by mass) | 35.0 | | 35.0 | | 35.0 | | 35.0 |
| | GAN | (parts by mass) | | 35.0 | | 35.0 | | 35.0 | |
| | TG-pAP | (parts by mass) | | | | | | | |
| | 1,6-DON | (parts by mass) | | | | | | | |
| | TEPIC | (parts by mass) | | | | | | | |
| | DGEBA | (parts by mass) | | | | | | | |
| Resin particle F | MX-416 | (parts by mass) | 30.0 | 30.0 | 30.0 | 30.0 | 30.0 | 30.0 | 30.0 |
| Ratio of each component of curing agent composition (curing agent liquid) for thermosetting resin | Total amount of curing agent | (parts by mass) | 47 | 45 | 44 | 45 | 42 | 43 | 44 |
| | Ratio of curing agent A | (mass%) | 50 | 40 | 40 | 40 | 40 | 40 | 20 |
| | Ratio of curing agent B | (mass%) | 40 | 55 | 55 | 55 | 55 | 55 | 70 |
| | Ratio of curing agent C | (mass%) | 10 | 5 | 5 | 5 | 5 | 5 | 10 |
| Ratio of each component of epoxy base resin liquid | Total amount of epoxy resin | (parts by mass) | 100 | 100 | 100 | 100 | 100 | 100 | 100 |
| | Ratio of epoxy resin D | (mass%) | 65 | 65 | 65 | 65 | 65 | 65 | 65 |
| | Ratio of epoxy resin E | (mass%) | 35 | 35 | 35 | 35 | 35 | 35 | 35 |
| Resin particle F | Ratio of resin particle F | (mass%) | 5 | 5 | 5 | 5 | 5 | 5 | 5 |
| Curing agent liquid property | Liquid state retention property | | OK | OK | OK | OK | OK | OK | OK |
| Epoxy resin composition properties | Initial viscosity (100°C) | (mPa·s) | 27 | 30 | 25 | 30 | 24 | 28 | 22 |
| | Pot life (100°C) | (min) | >120 | 93 | >120 | 93 | >120 | 80 | >120 |
| | DEA cure degree (180°C for 40 minutes) | (%) | 90 | 92 | 85 | 90 | 90 | 95 | 86 |
| Resin cured product properties | wet-Tg | (°C) | 156 | 155 | 156 | 150 | 153 | 151 | 154 |
| | RTD-FM | (GPa) | 3.6 | 3.7 | 3.3 | 3.6 | 3.5 | 3.7 | 3.7 |
| | KIc | (MPa·$m^{1/2}$) | 0.90 | 0.85 | 0.90 | 0.87 | 0.86 | 0.81 | 0.89 |

(continued)

| | | | Example | | | | | | |
|---|---|---|---|---|---|---|---|---|---|
| | | | 31 | 32 | 33 | 34 | 35 | 36 | 37 |
| CFRP properties | CAI | (MPa) | 300 | 293 | 305 | 318 | 287 | 293 | 276 |
| | RTD-OHC | (MPa) | 323 | 338 | 324 | 333 | 329 | 342 | 335 |

[Examples 38 to 44]

The procedure was conducted in the same manner as in Example 31, except that the composition was changed as shown in Table 5. Table 5 shows the evaluation results.

[Table 5]

| | | | Example | | | | | | |
|---|---|---|---|---|---|---|---|---|---|
| | | | 38 | 39 | 40 | 41 | 42 | 43 | 44 |
| Curing agent A | M-MIPA | (parts by mass) | 21.6 | | | 18.0 | 18.0 | 17.6 | 18.0 |
| | MED-J | (parts by mass) | | 6.5 | 10.5 | | | | |
| Curing agent B | DETDA | (parts by mass) | 21.6 | 17.3 | 29.5 | 24.8 | 24.8 | 24.2 | 22.5 |
| | DMTDA | (parts by mass) | | 13.0 | | | | | |
| | Kayahard AA | (parts by mass) | 4.8 | | | | | | |
| Curing agent C | 3,4'-DAPE | (parts by mass) | | 6.5 | 2.1 | 2.3 | 2.3 | 2.2 | 4.5 |
| | TPE-R | (parts by mass) | | | | | | | |
| | MPD | (parts by mass) | | | | | | | |
| Epoxy resin D | 4,4'-TGDDM | (parts by mass) | | | | 42.5 | | | |
| | 3,4'-TGDDE | (parts by mass) | 42.5 | 42.5 | 42.5 | | 42.5 | 42.5 | 42.5 |
| Epoxy resin E | GOT | (parts by mass) | | 35.0 | 35.0 | | 25.0 | | 30.0 |
| | GAN | (parts by mass) | 35.0 | | | 35.0 | | 25.0 | |
| | TG-pAP | (parts by mass) | | | | | 100 | | |
| | 1,6-DON | (parts by mass) | | | | | | 100 | |
| | TEPIC | (parts by mass) | | | | | | | 5.0 |
| | DGEBA | (parts by mass) | | | | | | | |

(continued)

| | | | Example | | | | | | |
|---|---|---|---|---|---|---|---|---|---|
| | | | 38 | 39 | 40 | 41 | 42 | 43 | 44 |
| Resin particle F | MX-416 | (parts by mass) | 30.0 | 30.0 | 30.0 | 30.0 | 30.0 | 30.0 | 30.0 |
| Ratio of each component of curing agent composition (curing agent liquid) for thermosetting resin | Total amount of curing agent | (parts by mass) | 48 | 43 | 42 | 45 | 45 | 44 | 45 |
| | Ratio of curing agent A | (mass%) | 45 | 15 | 25 | 40 | 40 | 40 | 40 |
| | Ratio of curing agent B | (mass%) | 55 | 70 | 70 | 55 | 55 | 55 | 50 |
| | Ratio of curing agent C | (mass%) | 0 | 15 | 5 | 5 | 5 | 5 | 10 |
| Ratio of each component of epoxy base resin liquid | Total amount of epoxy resin | (parts by mass) | 100 | 100 | 100 | 100 | 100 | 100 | 100 |
| | Ratio of epoxy resin D | (mass%) | 65 | 65 | 65 | 65 | 65 | 65 | 65 |
| | Ratio of epoxy resin E | (mass%) | 35 | 35 | 35 | 35 | 35 | 35 | 35 |
| Resin particle F | Ratio of resin particle F | (mass%) | 5 | 5 | 5 | 5 | 5 | 5 | 5 |
| Curing agent liquid property | Liquid state retention property | | OK | OK | OK | OK | OK | OK | OK |
| Epoxy resin composition properties | Initial viscosity (100°C) | (mPa·s) | 27 | 23 | 21 | 28 | 26 | 36 | 23 |
| | Pot life (100°C) | (min) | 87 | >120 | >120 | 88 | >120 | 72 | 79 |
| | DEA cure degree (180°C for 40 minutes) | (%) | 91 | 88 | 81 | 93 | 91 | 95 | 94 |
| Resin cured product properties | wet-Tg | (°C) | 155 | 152 | 155 | 162 | 165 | 159 | 162 |
| | RTD-FM | (GPa) | 3.8 | 3.4 | 3.3 | 3.4 | 3.2 | 3.6 | 3.3 |
| | KIc | ($MPa\cdot m^{1/2}$) | 0.81 | 0.82 | 0.92 | 0.86 | 0.85 | 0.88 | 0.77 |
| CFRP properties | CAI | (MPa) | 280 | 265 | 322 | 282 | 288 | 290 | 263 |
| | RTD-OHC | (MPa) | 343 | 330 | 326 | 320 | 322 | 327 | 318 |

[Comparative examples 11 to 15, Reference examples 1 to 3]

The procedure was conducted in the same manner as in Example 31, except that the composition was changed as shown in Table 6. Table 6 shows the evaluation results.

[Table 6]

| | | | Comparative example | | | | | Reference example | | |
|---|---|---|---|---|---|---|---|---|---|---|
| | | | 11 | 12 | 13 | 14 | 15 | 1 | 2 | 3 |
| Curing agent A | M-MIPA | (parts by mass) | 67.0 | | 20.0 | | 20.6 | 14.4 | 18.4 | 17.2 |
| | MED-J | (parts by mass) | | | | | | | | |
| Curing agent B | DETDA | (parts by mass) | | | | | | 19.8 | 25.3 | 23.7 |
| | DMTDA | (parts by mass) | | 45.3 | | | 31.2 | | | |
| | Kayahard AA | (parts by mass) | | | | | | | | |
| Curing agent C | 3.4'-DAPE | (parts by mass) | | | 30.1 | 42.8 | | 1.8 | 2.3 | 2.2 |
| | TPE-R | (parts by mass) | | | | | | | | |
| | MPD | (parts by mass) | | | | | | | | |
| Epoxy resin D | 4,4'-TGDDM | (parts by mass) | | | | | | | | |
| | 3,4'-TGDDE | (parts by mass) | 500 | 42.0 | 41.2 | 42.5 | 41.0 | | 77.0 | 65.0 |
| Epoxy resin E | GOT | (parts by mass) | 35.0 | 35.0 | 35.0 | 35.0 | 34.9 | 35.0 | | 35.0 |
| | GAN | (parts by mass) | | | | | | | | |
| | TG-pAP | (parts by mass) | | | | | | | | |
| | 1,6-DON | (parts by mass) | | | | | | | | |
| | TEPIC | (parts by mass) | | | | | | | | |
| | DGEBA | (parts by mass) | | | | | | 42.0 | | |
| Resin particle F | MX-416 | (parts by mass) | 20.0 | 30.6 | 31.6 | 30.0 | 320 | 30.0 | 30.0 | |

(continued)

| | | | Comparative example | | | | | Reference example | | |
|---|---|---|---|---|---|---|---|---|---|---|
| | | | 11 | 12 | 13 | 14 | 15 | 1 | 2 | 3 |
| Ratio of each component of curing agent composition (curing agent liquid) for thermosetting resin | Total amount of curing agent | (parts by mass) | 67 | 45 | 50 | 43 | 52 | 36 | 46 | 43 |
| | Ratio of curing agent A | (mass%) | 100 | 0 | 40 | 0 | 40 | 40 | 40 | 40 |
| | Ratio of curing agent B | (mass%) | 0 | 100 | 0 | 0 | 60 | 55 | 55 | 55 |
| | Ratio of curing agent C | (mass%) | 0 | 0 | 60 | 100 | 0 | 5 | 5 | 5 |
| Ratio of each component of epoxy base resin liquid | Total amount of epoxy resin | (parts by mass) | 100 | 100 | 100 | 100 | 100 | 100 | 100 | 100 |
| | Ratio of epoxy resin D | (mass%) | 65 | 65 | 65 | 65 | 65 | 23 | 100 | 65 |
| | Ratio of epoxy resin E | (mass%) | 35 | 35 | 35 | 35 | 35 | 77 | 0 | 35 |
| Resin particle F | Ratio of resin particle F | (mass%) | 3 | 0 | 0 | 0 | 0 | 5 | 5 | 0 |
| Curing agent liquid property | Liquid state retention property | | NG | OK | NG | NG | OK | OK | OK | OK |
| Epoxy resin composition properties | Initial viscosity (100°C) | (mPa·s) | 32 | - | - | - | - | 12 | 131 | 25 |
| | Pot life (100°C) | (min) | >120 | - | - | - | - | >120 | - | 105 |
| | DEA cure degree (180°C for 40 minutes) | (%) | 33 | 9 | - | - | 20 | 84 | 98 | 91 |
| Resin cured product properties | wet-Tg | (°C) | 153 | - | - | - | - | 116 | - | 154 |
| | RTD-FM | (GPa) | 3.8 | - | - | - | - | 3.3 | - | 3.9 |
| | KIc | (MPa·$m^{1/2}$) | 0.92 | - | - | - | - | 0.95 | - | 0.57 |
| CFRP properties | CAI | (MPa) | 321 | - | - | - | - | - | - | - |
| | RTD-OHC | (MPa) | 330 | - | - | - | - | - | - | - |

In Comparative examples 11, 13 and 14, since no curing agent B was used, solids precipitated within one week.

In Comparative examples 11, 12 and 15, since curing agent C was not used, the DEA cure degree was significantly decreased, and fast curability was not exhibited.

Reference example 1 is an example in which epoxy resin D is not used.

Reference example 2 is an example in which epoxy resin E is not used.

Reference example 3 is an example in which resin particles F are not used.

[Industrial Applicability]

Use of the curing agent composition for thermosetting resin and the epoxy resin composition of the present invention enables to produce resin cured products and fiber-reinforced composite materials having excellent mechanical properties. In addition, the curing agent composition for thermosetting resin and the epoxy resin composition of the present invention exhibit high handleability during molding and a short curing time due to their low viscosity and long pot life, and thus enable production, with a higher productivity than before, of a fiber-reinforced composite material having excellent quality and mechanical properties. The obtained fiber-reinforced composite material can be used, for example, as materials of automobiles and aircraft.

**Claims**

1. A curing agent composition for thermosetting resin, comprising a curing agent A, a curing agent B, and a curing agent C, wherein the curing agent A is an aromatic polyamine having a substituent selected from an alkyl group, an aromatic group, and a halogen group at each of two ortho positions of an amino group, the curing agent B is an aromatic polyamine that is liquid at 25°C, and the curing agent C is an aromatic polyamine having only one electron donating substituent or no substituent at an ortho position of an amino group.

2. The curing agent composition for thermosetting resin according to claim 1, wherein a total mass of the curing agent A, the curing agent B, and the curing agent C is 70 to 100 mass% with respect to the total mass of the curing agent composition for thermosetting resin, a mass ratio of the curing agent A to the curing agent B is 1:99 to 99: 1, and the curing agent C is 1 to 43 parts by mass with respect to a total of 100 parts by mass of the curing agents A and B.

3. The curing agent composition for thermosetting resin according to claim 1, wherein the electron donating substituent of the aromatic polyamine of the curing agent C is a methyl group, an ethyl group, a propyl group, an isopropyl group, a methoxy group, or an ethoxy group.

4. The curing agent composition for thermosetting resin according to claim 3, wherein the aromatic polyamine of the curing agent C has a melting point of 150°C or lower.

5. The curing agent composition for thermosetting resin according to claim 1, wherein the aromatic polyamine of the curing agent A is an aromatic diamine.

6. The curing agent composition for thermosetting resin according to claim 5, wherein the aromatic diamine of the curing agent A is a 4,4'-diaminodiphenylmethane derivative.

7. The curing agent composition for thermosetting resin according to claim 1, wherein the aromatic polyamine of the curing agent B is a phenylenediamine derivative or a 4,4'-diaminodiphenylmethane derivative.

8. The curing agent composition for thermosetting resin according to claim 1, wherein the composition is a uniform liquid at a temperature of 80 to 200°C, and is a uniform liquid after raising a liquid temperature to 200°C, then lowering to 25°C, and standing at 25°C for 1 week.

9. An epoxy resin composition comprising a curing agent composition for thermosetting resin and an epoxy base resin, wherein the curing agent composition for thermosetting resin is the curing agent composition for thermosetting resin according to claim 1.

10. An epoxy resin composition comprising a curing agent A, a curing agent B, a curing agent C, an epoxy resin D, an epoxy resin E, and resin particles F, wherein the curing agent A is an aromatic polyamine having a substituent selected from an alkyl group, an aromatic group, and a halogen group at each of two ortho positions of an amino group, the curing agent B is an aromatic polyamine that is liquid at 25°C, and the curing agent C is an aromatic polyamine having only one electron donating substituent or no substituent at an ortho position of an amino group, the epoxy resin D is constituted by an epoxy resin which is composed of a monomer containing 4 or more glycidyl

groups, and the epoxy resin E is constituted by an epoxy resin which is composed of a monomer containing 2 or 3 glycidyl groups.

**11.** The epoxy resin composition according to claim 10, wherein the monomer containing 4 or more glycidyl groups of the epoxy resin D is represented by the following chemical formula.

[Chem. 1]

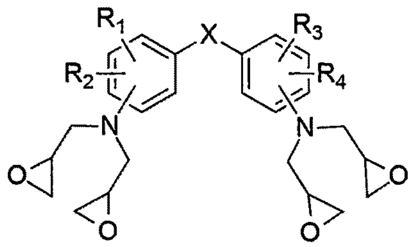

(In the chemical formula (1), $R_1$ to $R_4$ each independently represent one selected from the group consisting of a hydrogen atom, an aliphatic hydrocarbon group, an alicyclic hydrocarbon group, and a halogen atom, and X represents one selected from $-CH_2-$, -O-, -S-, -CO-, -C(=O)O-, -O-C(=O)-, -NHCO-, -CONH-, $-SO_2-$).

**12.** The epoxy resin composition according to claim 11, wherein the monomer containing 4 or more glycidyl groups of the epoxy resin D is one or a combination of two or more selected from the group consisting of tetraglycidyl-4,4'-diaminodiphenyl ether, tetraglycidyl-4,4'-diaminodiphenyl methane, tetraglycidyl-3,4'-diaminodiphenyl ether, and tetraglycidyl-3,3'-diaminodiphenyl methane.

**13.** The epoxy resin composition according to claim 10, wherein the epoxy resin D is contained in an amount of 50 to 90 mass% with respect to a total mass of the epoxy resins contained in the epoxy resin composition.

**14.** The epoxy resin composition according to claim 10, wherein the monomer containing two or three glycidyl groups of the epoxy resin E is one or a combination of two or more selected from the group consisting of diglycidylaniline, diglycidyl-o-toluidine, triglycidyl-p-aminophenol, triglycidyl-m-aminophenol, 1,6-bis(2,3-epoxypropan-1-yloxy)naphthalene, and 1,3,5-triglycidyl isocyanurate.

**15.** The epoxy resin composition according to claim 10, wherein the resin particles F have an average particle size of 1.0 μm or less.

**16.** The epoxy resin composition according to claim 10, wherein a ratio between the total number of epoxy groups in the epoxy resin composition and the number of active hydrogens contained in the curing agent composition for thermosetting resin is 0.7 to 1.3.

**17.** The epoxy resin composition according to claim 10, wherein a cured product obtained by curing the epoxy resin composition at 180°C for 30 minutes has a DSC cure degree α represented by the following formula of 98% or more.

$$\alpha = (\Delta H \text{ uncured} - \Delta H \text{ cured product}) / \Delta H \text{ uncured} \times 100$$

(wherein ΔH is a calorific value of a curing reaction confirmed when DSC measurement is performed at a temperature increase rate of 20°C/minute, ΔH uncured is ΔH of an uncured epoxy resin composition, and ΔH cured product is ΔH of a resin cured product.)

**18.** The epoxy resin composition according to claim 10, wherein a cure degree after heating at 180°C for 40 minutes is 70% or more as evaluated by dielectric cure degree measurement.

**19.** A resin cured product obtained by curing the epoxy resin composition according to claim 10.

**20.** A fiber-reinforced composite material comprising a resin cured product obtained by curing the epoxy resin composition according to claim 10 and a reinforcing fiber base material.

**21.** The fiber-reinforced composite material according to claim 20, wherein the reinforcing fiber base material is a carbon reinforcing fiber base material.

**22.** A method for producing a fiber-reinforced composite material, comprising compositing and curing a reinforcing fiber base material and the epoxy resin composition according to claim 10.

**23.** A method for producing a fiber-reinforced composite material, comprising a step of impregnating the epoxy resin composition according to claim 10 into a reinforcing fiber base material arranged in a mold, and then performing heat curing.

## INTERNATIONAL SEARCH REPORT

International application No.
**PCT/JP2022/008140**

**A. CLASSIFICATION OF SUBJECT MATTER**

***C08G 59/50***(2006.01)i; ***C08K 7/02***(2006.01)i; ***C08L 63/00***(2006.01)i; ***C08J 5/04***(2006.01)i
FI: C08G59/50; C08L63/00 C; C08K7/02; C08J5/04 CFC

According to International Patent Classification (IPC) or to both national classification and IPC

**B. FIELDS SEARCHED**

Minimum documentation searched (classification system followed by classification symbols)

B29B11/16; B29B15/08-15/14; C08G59/00-59/72; C08J5/04-5/10; C08J5/24; C08K7/02; C08L63/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2013-159618 A (TORAY IND INC) 19 August 2013 (2013-08-19) claims, paragraphs [0037], [0063], table 1, examples | 1-3, 5, 7-23 |
| X | JP 2010-150310 A (TORAY IND INC) 08 July 2010 (2010-07-08) claims, paragraphs [0019], [0026], [0028], [0034], [0038], [0071], [0082]-[0083], examples 22-33 | 1-23 |
| A | JP 2020-527180 A (HEXCEL COMPOSITES LIMITED) 03 September 2020 (2020-09-03) entire text | 1-23 |
| A | JP 47-14149 B1 (MITSUI TOATSU CHEMICALS, INC.) 27 April 1972 (1972-04-27) entire text | 1-23 |
| A | JP 46-30592 B1 (MITSUI TOATSU CHEMICALS, INC.) 06 September 1971 (1971-09-06) entire text | 1-23 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008140**

| Patent document cited in search report | Publication date (day/month/year) | Patent family member(s) | Publication date (day/month/year) |
| --- | --- | --- | --- |
| JP 2013-159618 A | 19 August 2013 | (Family: none) | |
| JP 2010-150310 A | 08 July 2010 | (Family: none) | |
| JP 2020-527180 A | 03 September 2020 | US 2020/0115492 A1<br>entire text<br>WO 2019/011774 A1<br>EP 3652233 A1<br>CN 110869412 A<br>KR 10-2020-0041862 A | |
| JP 47-14149 B1 | 27 April 1972 | (Family: none) | |
| JP 46-30592 B1 | 06 September 1971 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014148572 A
- JP 2015193713 A
- WO 2009119467 A
- JP 6617559 B